(19) Europäisches Patentamt
European Patent Office
Office européen des brevets

(11) **EP 2 980 507 A1**

(12) **EUROPEAN PATENT APPLICATION**
published in accordance with Art. 153(4) EPC

(43) Date of publication:
**03.02.2016  Bulletin 2016/05**

(51) Int Cl.:
**F24J 2/38** (2006.01)       **F24J 2/16** (2006.01)

(21) Application number: **14775805.6**

(22) Date of filing: **14.03.2014**

(86) International application number:
**PCT/JP2014/056904**

(87) International publication number:
**WO 2014/156725 (02.10.2014 Gazette 2014/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.03.2013  JP 2013071174**
**23.08.2013  JP 2013172890**

(71) Applicant: **Hitachi Zosen Corporation**
**Osaka-shi, Osaka 559-8559 (JP)**

(72) Inventors:
• **ASHIDA, Satoshi**
**Osaka-shi**
**Osaka 559-8559 (JP)**
• **MA, Donghui**
**Osaka-shi**
**Osaka 559-8559 (JP)**

(74) Representative: **Müller-Boré & Partner**
**Patentanwälte PartG mbB**
**Friedenheimer Brücke 21**
**80639 München (DE)**

(54) **SUNLIGHT COLLECTION DEVICE**

(57)    A sunlight concentrating apparatus (1) includes a main shaft part (2) that is long in an axial direction, a rotating mechanism for rotating the main shaft part (2), and a plate-like reflecting part (3). The reflecting part (3) has an upper surface that is a reflection surface (30) extending in the axial direction and a width direction perpendicular to the axial direction, and a lower surface in which a central linear region (39) extending in the axial direction at approximately the center of the width direction is fixed to the main shaft part (2). When a direction perpendicular to the axial direction and the width direction is a central normal direction, the apparatus further includes a pair of bending mechanisms for bending the reflection surface (30) by moving opposite end portions in the width direction of the reflecting part (3) in a similar manner in the central normal direction in accordance with the rotation of the main shaft part (2). The reflecting part (3) includes a mirror plate (31) and a support plate (32) laid on the mirror plate (31), and in the support plate (32), the ratio between the distance in the width direction from each end portion in the width direction and the second moment of area at this distance is constant between the end portion and the central linear region (39). This allows the reflection surface (30) to be bent in a generally arc shape.

FIG. 2

EP 2 980 507 A1

## Description

### Technical Field

The present invention relates to a sunlight concentrating apparatus for concentrating sunlight onto a heat collecting part.

### Background Art

In recent years, solar heat collecting systems that collect solar heat energy by concentrating sunlight and heating a heating medium have been put into practical use. It is important for solar heat collecting systems to efficiently collect the solar heat energy. For example, International Publication No. 2011/086825 (Document 1) discloses a technique for, in a sunlight concentrating apparatus that tilts a reflecting mirror in accordance with the movement of the sun, efficiently guiding (reflected light of) sunlight to a heat collecting means by changing the degree of curve of the reflection surface in accordance with the tilting position of the reflecting mirror. More specifically, in the sunlight concentrating apparatus of Document 1, the reflecting mirror is supported at the center, and the degree of curve of the reflection surface is changed by raising and lowering both side edge portions of the reflecting mirror in accordance with the tilting position of the reflecting mirror.

Incidentally, in order to efficiently concentrate sunlight onto the heat collecting part, a sunlight concentrating apparatus that changes the deflection of the reflection surface while rotating (tilting) the reflection surface, as in Document 1, sets the tilt angle and curvature of the reflection surface such that the reflection surface follows a parabola that is focusing on the position of the heat collecting part and whose axis of symmetry is a straight line parallel to sunlight in a plane perpendicular to the rotation axis and passing through the heat collecting part. However, keeping the curvature of the reflection surface substantially constant, i.e., bending the reflection surface in a generally arc shape is not easy, and efficiently guiding the sunlight emitted onto the entire reflection surface to the heat collecting part is difficult. Document 1 discloses a technique for providing the reflecting mirror with a concave portion to change the rigidity of the reflecting mirror in a transverse cross-sectional direction and thereby changing the degree of curve of the reflecting mirror, but even with this technique, it is not easy to bend the reflection surface in a generally arc shape.

### Summary of Invention

The present invention is intended for a sunlight concentrating apparatus for concentrating sunlight onto a heat collecting part, and it is an object of the present invention to bend a reflection surface in a generally arc shape.

The sunlight concentrating apparatus according to the present invention includes a main shaft part that is long in a predetermined axial direction, a plate-like reflecting part having an upper surface that is a reflection surface extending in the axial direction and a width direction perpendicular to the axial direction, and having a lower surface in which a central linear region that extends in the axial direction at approximately a center in the width direction is fixed to the main shaft part, a main shaft supporter for supporting the main shaft part rotatably about a central axis parallel to the axial direction, a rotating mechanism for rotating the main shaft part to tilt the reflection surface, and a pair of bending mechanisms for bending the reflection surface by moving opposite end portions in the width direction of the reflecting part in a similar manner in a central normal direction in accordance with rotation of the main shaft part, the central normal direction being a direction perpendicular to the axial direction and the width direction of the reflection surface. The reflecting part has a cross-sectional shape that is perpendicular to the width direction and that changes along the width direction to bend the reflection surface in a generally arc shape.

According to the present invention, the reflection surface can easily bend in a generally arc shape. Consequently, sunlight can efficiently be concentrated onto the heat collecting part.

In a preferred embodiment of the present invention, when a mirror plate of the reflecting part or a support plate laid on the mirror plate is taken as a target plate member, a ratio between a distance in the width direction from each end portion of the reflecting part in the width direction and a second moment of area of the target plate member at the distance is constant between the end portion and the central linear region, or a ratio between the distance and flexural rigidity of the reflecting part at the distance is constant between the end portion and the central linear region.

In this case, in one aspect, the reflecting part includes the mirror plate and the support plate, the target plate member is the support plate, and the support plate has a triangular portion between the end portion and the central linear region, the triangular portion having a base located in the central linear region and a vertex opposing the base and located in the vicinity of the end portion. In another aspect, the reflecting part includes the mirror plate and the support plate, and the support plate has a portion whose thickness or width in the axial direction gradually increases from the end portion toward the central linear region to make the ratio between the distance and the flexural rigidity of the reflecting part at the distance constant between the end portion and the central linear region.

In another preferred embodiment of the present invention, the reflecting part includes a mirror plate, and a support beam extending in the width direction and for supporting the mirror plate. The support beam has a cross-sectional shape that is perpendicular to the width direction and that changes along the width direction to make a ratio between a distance in the width direction from each end portion of the reflecting part in the width direction and flexural rigidity of the reflecting part at the distance constant between the end portion and the central linear region.

In yet another preferred embodiment of the present invention, when a portion of the reflecting part between each end portion in the width direction and the central linear region is divided into a plurality of sections in the width direction, a ratio between a distance in the width direction from the end portion to each section and an average value of flexural rigidity of the reflecting part in the section is approximately constant in the plurality of sections.

These and other objects, features, aspects and advantages of the present invention will become more apparent from the following detailed description of the present invention when taken in conjunction with the accompanying drawings.

**Brief Description of Drawings**

Fig. 1 is a plan view of a solar heat collecting system;
Fig. 2 is a plan view of part of a sunlight concentrating apparatus;
Fig. 3 is a front view illustrating the vicinity of the center of the sunlight concentrating apparatus;
Fig. 4 is a cross-sectional view of the sunlight concentrating apparatus;
Fig. 5 illustrates a rotating mechanism;
Fig. 6 is a cross-sectional view of the sunlight concentrating apparatus;
Fig. 7 illustrates a rod supporter;
Fig. 8 illustrates a change in the width of a plate member;
Fig. 9 is a plan view of part of a reflecting part;
Fig. 10 illustrates deflection curves of a reflection surface;
Fig. 11 illustrates deflection curves of the reflection surface when rib members are omitted;
Fig. 12 illustrates tangential angular differences;
Fig. 13 illustrates tangential angular differences when the rib members are omitted;
Fig. 14 illustrates another example of the reflecting part;
Fig. 15 illustrates deflection curves of the reflection surface;
Fig. 16 illustrates tangential angular differences;
Fig. 17 illustrates a change in the thickness of a member;
Fig. 18 is a cross-sectional view of another example of the reflecting part;
Fig. 19 illustrates a relationship between the width of the support plate and the flexural rigidity of the reflecting part;
Fig. 20 illustrates a change in the width of the support plate;
Fig. 21 is a plan view of the reflecting part;
Fig. 22 is a cross-sectional view of another example of the reflecting part;
Fig. 23 illustrates a relationship between the thickness of the support plate and the flexural rigidity of the reflecting part;
Fig. 24 illustrates a change in the thickness of the support plate;
Fig. 25 is a perspective view of another example of the reflecting part;
Fig. 26 is a perspective view of support beams and the rib members;
Fig. 27 is a cross-sectional view of the reflecting part;
Fig. 28 is a perspective view of a support beam;
Fig. 29 illustrates a change in the height of the support beams;
Fig. 30.A is a perspective view of another example of the support beams;

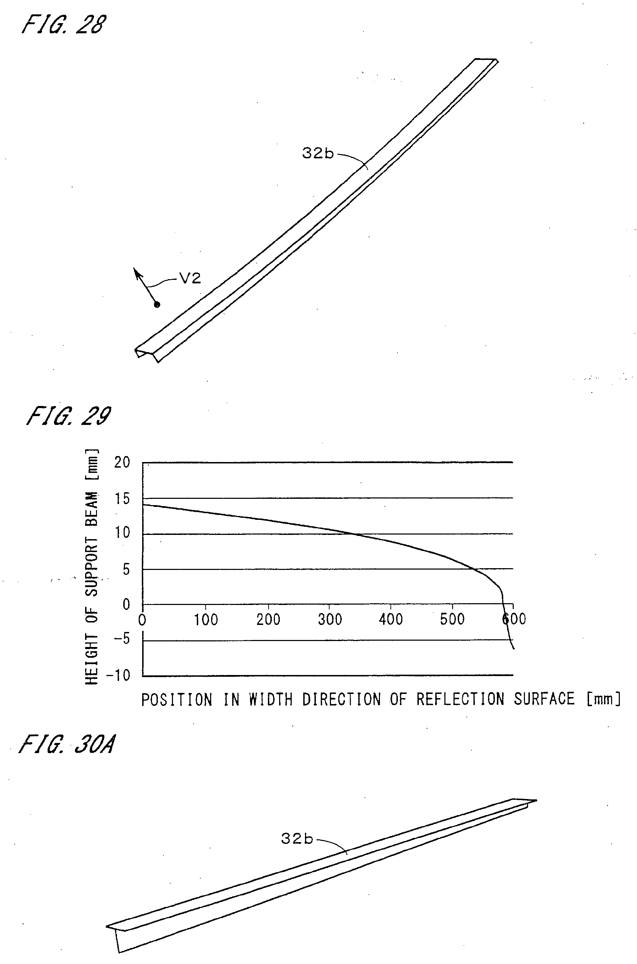

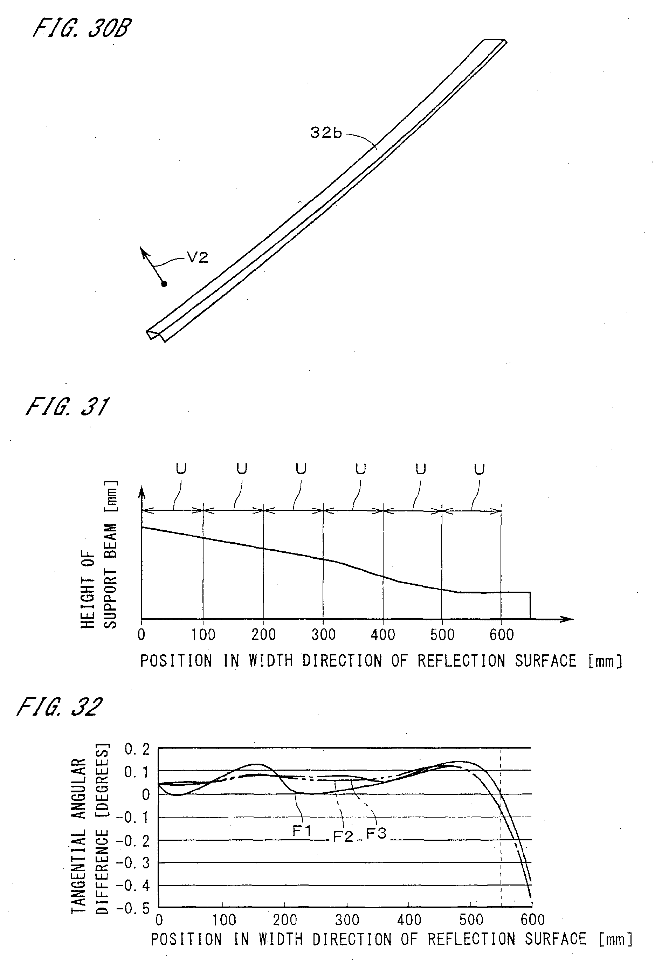

Fig. 30.B is a perspective view of another example of the support beams;
Fig. 31 illustrates a change in the height of another example of the support beams;
Fig. 32 illustrates tangential angular differences;

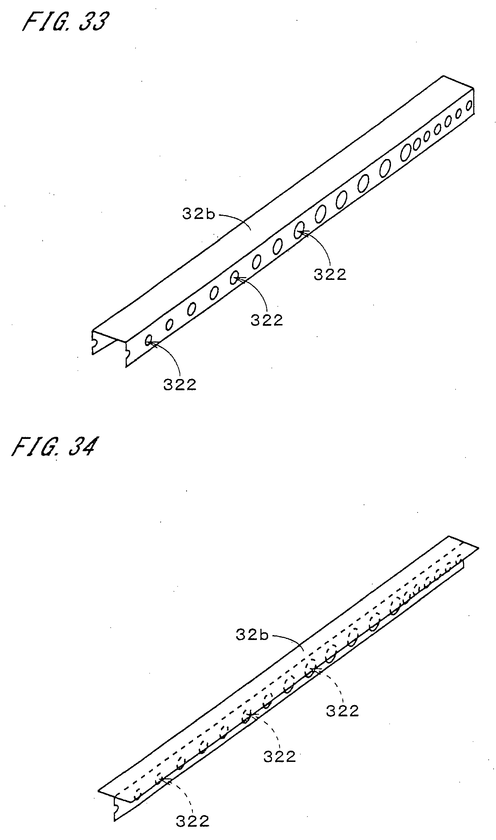

Fig. 33 is a perspective view of another example of the support beams;
Fig. 34 is a perspective view of another example of the support beams; and

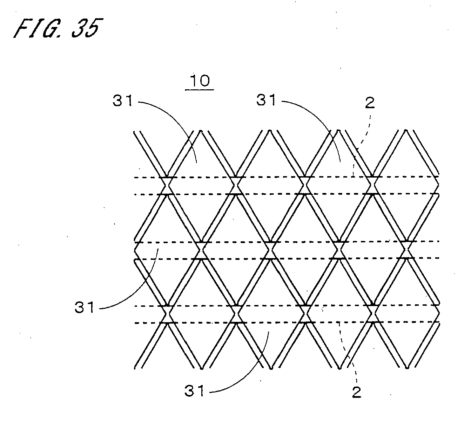

Fig. 35 illustrates another example of the solar heat collecting system.

**Description of Embodiments**

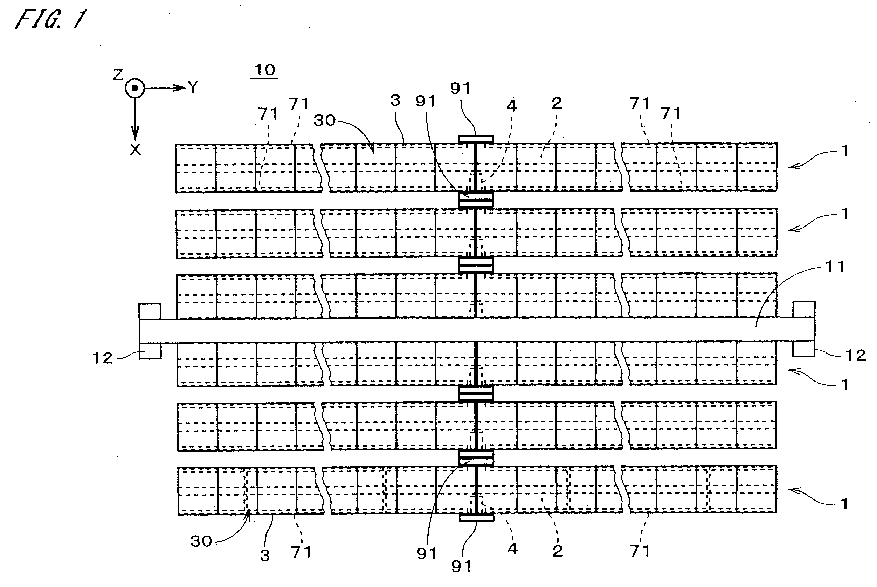

Fig. 1 is a plan view of a Fresnel solar heat collecting system 10 according to an embodiment of the present invention. In Fig. 1, X, Y, and Z directions that are orthogonal to one another are indicated by arrows (the same applies to drawings described later). The solar heat collecting system 10 includes a heat collecting part 11 in which a heating medium flows, and a plurality of (in Fig. 1, six) sunlight concentrating apparatuses 1 for concentrating sunlight onto the heat collecting part 11 to heat the heating medium in the heat collecting part 11. The heat collecting part 11 is a tubular member that is long in the Y direction. Both ends of the heat collecting part 11 are supported by a pair of strut parts 12, and the heat collecting part 11 is disposed on the +Z side of the plurality of sunlight concentrating apparatuses 1. The heating medium in the heat collecting part 11 is, for example, circulated between the heat collecting part 11 and an external electric power generator and used for electric power generation by the electric power generator. In the following description, the +Z side is referred to as the "upper side," and the -Z side is referred to as the "lower side."

The plurality of sunlight concentrating apparatuses 1 are arrayed in the X direction below the heat collecting part 11. Each sunlight concentrating apparatus 1 includes a generally tubular main shaft part 2 that is long in the Y direction, a reflecting part 3 that is fixed to the main shaft part 2 and is long along the length of the main shaft part 2 (i.e., in the Y direction, which is hereinafter referred to as an "axial direction"), and a rotating mechanism 4 that is disposed in the vicinity of the center of the main shaft part 2 in the axial direction. The reflecting part 3 has a plate-like shape and has an upper surface serving as a reflection surface 30. As will be described later, the reflection surface 30 is tilted by the rotating mechanism 4 rotating the main shaft part 2. The following description focuses on one of the sunlight concentrating apparatuses 1, but the other sunlight concentrating apparatuses 1 have the same configuration.

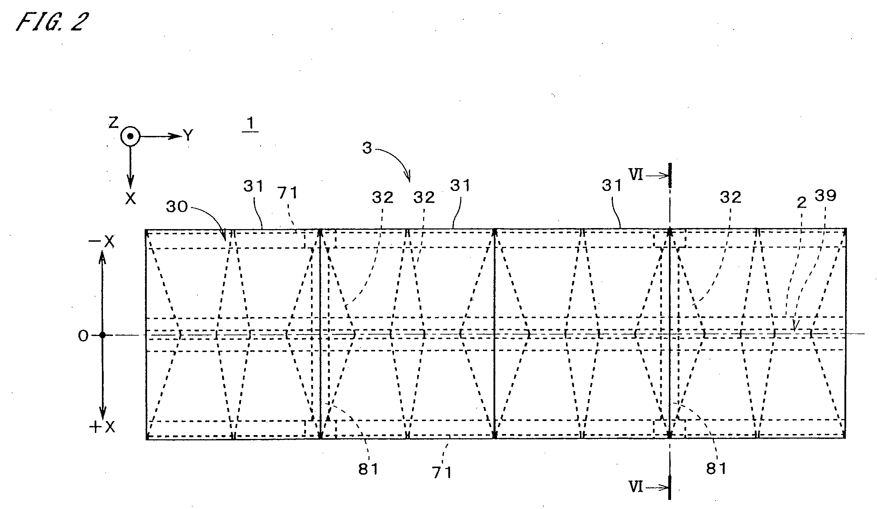

Fig. 2 is a plan view of part of the sunlight concentrating apparatus 1. The reflecting part 3 includes a plurality of mirror plates 31 (indicated by solid lines in Fig. 2) that form the reflection surface 30, and a plurality of support plates 32 (indicated by bold broken lines in Fig. 2) that are in contact with the lower surfaces of the plurality of mirror plates 3. Each mirror plate 31 is a rectangular (e.g., a rectangle of 1 meter (m) by 1.2 m) flexible member, and the plurality of mirror plates 31 are arrayed in the axial direction with a small space therebetween. Each support plate 32 is a rhombic flexible member, and the plurality of support plates 32 are arrayed in the axial direction with a space therebetween. In the present embodiment, four mirror plates 31 arrayed in the axial direction are taken as a single unit, and the sunlight concentrating apparatus 1 includes 23 units arrayed in the axial direction. The function of the rhombic support plates 32 laid on the mirror plates 31 will be described later.

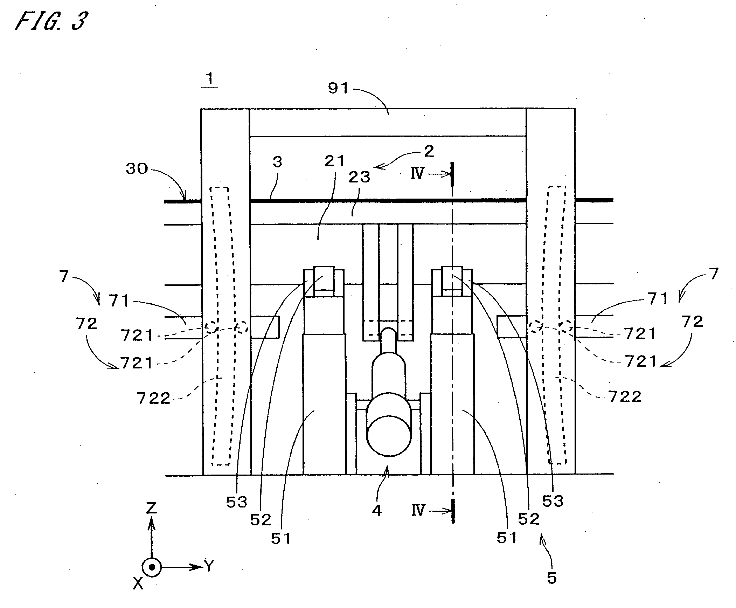

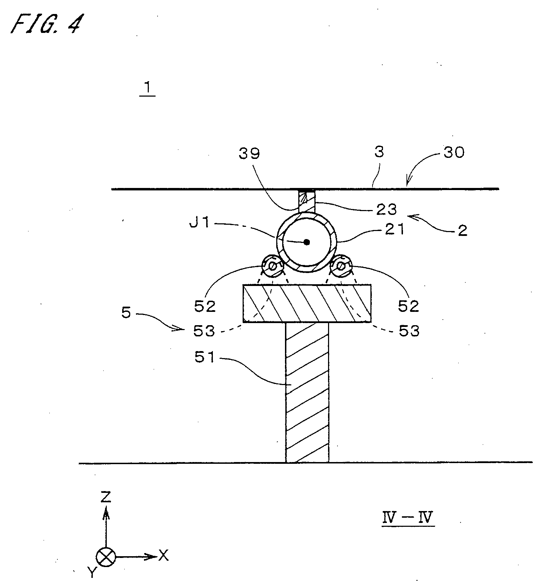

Fig. 3 is a front view illustrating the vicinity of the center of the sunlight concentrating apparatus 1 in the axial direction, and Fig. 4 is a cross-sectional view of the sunlight concentrating apparatus 1 as viewed from the position indicated by arrows IV-IV in Fig. 3. As illustrated in Figs. 3 and 4, the main shaft part 2 has a main shaft body 21 that is a tubular member, and the main shaft body 21 is fixed to the lower surface of the reflecting part 3 via a fixing member 23 that is long in the axial direction (Y direction). The main shaft body 21 is supported by a main shaft supporter 5. To be more specific, the main shaft supporter 5 includes a plurality of support bases 51 installed on the ground. Each support base 51 has two rollers 52 that are in contact with the outer peripheral surface of the main shaft body 21, and two roller supporters 53 that respectively rotatably support the two rollers 52 on the support base 51. While two support bases 51 are illustrated in Fig. 3, in actuality three or more support bases 51 are arranged in the axial direction with a space therebetween. In this way, the main shaft supporter 5 supports the main shaft part 2 rotatably about a central axis J1 parallel to the axial direction (in the present example, the central axis J1 of the main shaft body 21).

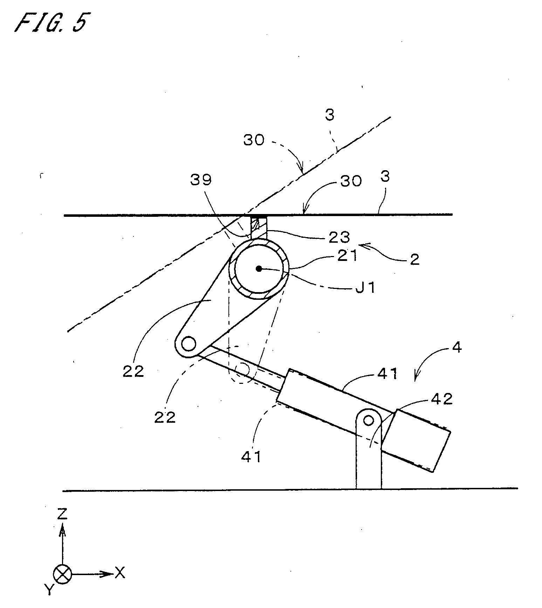

Fig. 5 illustrates the rotating mechanism 4 as viewed in the +Y direction from the -Y side. In Fig. 5, part of the main shaft part 2 is illustrated in cross section. The rotating mechanism 4 includes a cylinder part 41 that is, for example, an electric cylinder, a hydraulic cylinder, or a pneumatic cylinder, and the cylinder part 41 is fixed to the ground via a cylinder supporter 42 and is rotatable about an axis parallel to the Y direction. The main shaft body 21 is provided with a connector plate 22 that protrudes from the outer peripheral surface, and the end of a piston of the cylinder part 41 is fixed with a pin to the connector plate 22. As indicated by solid lines and dashed double-dotted lines in Fig. 5, the cylinder part 41 advances and retracts the piston to rotate the main shaft part 2 about the central axis J1 and to thereby tilt the reflection surface 30 of the reflecting part 3. In actuality, the deflection (deflection curve) of the reflecting part 3 changes in accordance with the rotation angle of the main shaft part 2 as will be described later, but Fig. 5 illustrates the reflecting part 3 that is assumed as not being bent. In the following description, when the reflecting part 3 is not bent, a direction along the reflection surface 30 and perpendicular to the axial direction is referred to as a "width direction." That is, when the reflecting part 3 is not bent, the reflection surface 30 extends in the axial direction and in the width direction.

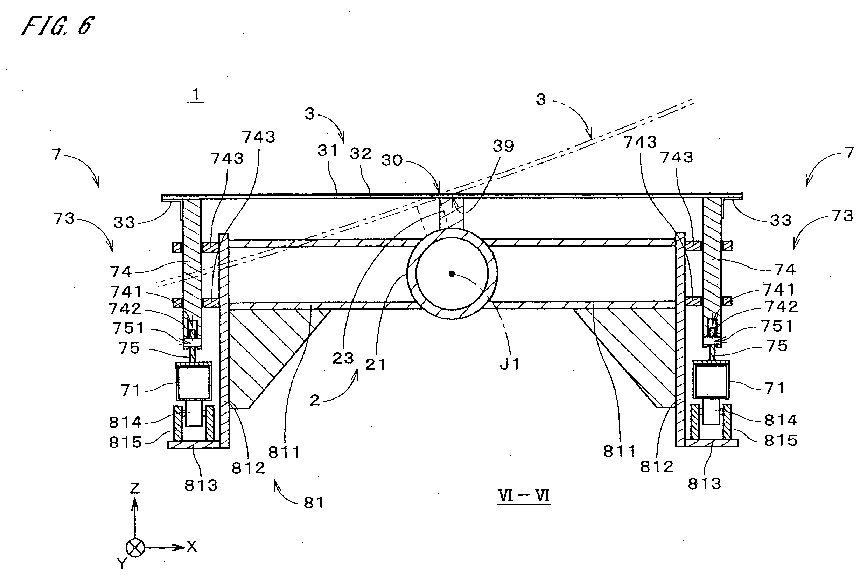

Fig. 6 is a cross-sectional view of the sunlight concentrating apparatus 1 as viewed from the position indicated by arrows VI-VI in Fig. 2. A linear region 39 (hereinafter, referred to as a "central linear region 39") that extends in the axial direction at approximately the center of the width direction is set on the lower surface of the reflecting part 3. The fixing member 23 that is long in the axial direction is fixed to the central linear region 39, and the reflecting part 3 is fixed to the main shaft part 2. Thus, the reflecting part 3 extends on both sides in the width direction from the central linear region 39, which is fixed to the main shaft part 2. Focusing on a portion of the reflecting part 3 on one side in the width direction in Figs. 4 and 5, the portion is supported by the fixing member 23 in a cantilever state. In the following description, the direction of the normal to the central linear region 39 of the reflecting part 3, i.e., the direction perpendicular to the axial direction and the width direction, is referred to as a "central normal direction." Although the width direction and the central normal direction are respectively parallel to the X direction and the Z direction in Fig. 6, the width direction and the central normal direction are fixed directions relative to the reflecting part 3, and when the reflecting part 3 tilts, the width direction and the central normal direction are also respectively inclined relative to the X direction and the Z direction.

As illustrated in Figs. 2 and 6, a sliding rod 71 that extends in the axial direction is provided on the lower surface side (the side opposite the reflection surface 30) of each end portion of the reflecting part 3 in the width direction. To be precise, sliding rods 71 forming a pair are disposed on both sides in the width direction of the portion of the main shaft part 2 on the +Y side of the rotating mechanism 4, and sliding rods 71 forming another pair are disposed on both sides in the width direction of the portion of the main shaft part 2 on the -Y side of the rotating mechanism 4, as illustrated in Fig. 1. In other words, four sliding rods 71 are provided in the sunlight concentrating apparatus 1. As illustrated in Fig. 6, each sliding rod 71 has a rectangular cross-sectional shape that is perpendicular to the axial direction. The main shaft part 2 is provided with a plurality of rod supporters 81 for supporting the sliding rods 71, and the plurality of rod supporters 81 are arranged in the axial direction with a space therebetween (see Fig. 2).

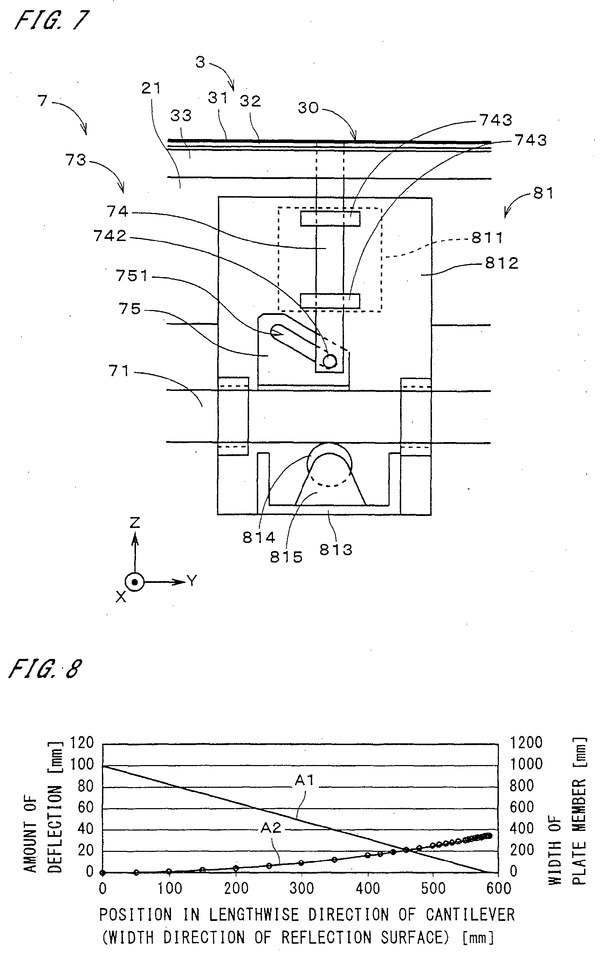

Fig. 7 illustrates a rod supporter 81 as viewed in the -X direction from the +X side. As illustrated in Figs. 6 and 7, each rod supporter 81 includes a pair of fixed arms 811 that protrude on both sides in the width direction from the outer peripheral surface of the main shaft body 21, and a pair of adapter plates 812 that are respectively provided at the ends of the pair of fixed arms 811. A support frame 813 that protrudes outward in the width direction is provided in the lower part of each adapter plate 812, and a roller 814 that is in contact with the lower surface of the sliding rod 71 and a roller supporter 815 that rotatably supports the roller 814 on the support frame 813 are provided on the support frame 813. Each sliding rod 71 is supported movably in the axial direction by the rollers 814 of the plurality of rod supporters 81. Note that the position of each sliding rod 71 relative to the main shaft part 2 in the width direction and the central normal direction is constant, and when the main shaft part 2 rotates, each sliding rod 71 also rotates about the central axis J1 along with the main shaft part 2.

As illustrated in Figs. 1 and 3, frames 91 forming a pair are provided on both sides of the reflecting part 3 in the X direction. Referring to the frame 91 illustrated in Fig. 3, a cam rail 722 is provided at a position that opposes each sliding rod 71. The shape of the cam rail 722 as viewed in the axial direction (Y direction) is an arc shape centered on the rotation axis of the main shaft part 2, i.e., the central axis J1 (see Fig. 6). A pair of rollers 721 is further provided in the end portion of each sliding rod 71 that is close to the rotating mechanism 4. The rollers 721 forming a pair are disposed on both sides of the cam rail 722 in the axial direction and are respectively in contact with two cam surfaces that are opposite end surfaces of the cam rail 722 in the axial direction. The distance between the opposite cam surfaces of the cam rail 722 is constant, but the position of the cam rail 722 in the axial direction varies depending on the circumferential angular position about the central axis J1. Thus, when the sliding rod 71 rotates about the central axis J1 along with the main shaft part 2, the cam rail 722 will change the axial positions of the pair of rollers 721. In other words, the rollers 721 and the cam rail 722 convert the rotation of the main shaft part 2 into axial movement of the sliding rod 71, and the sliding rod 71 moves (slides) in the axial direction. As described above, in the sunlight concentrating apparatus 1, the rollers 721 and the cam rail 722 implement a sliding mechanism 72 for sliding the sliding rod 71 in the axial direction in accordance with the rotation of the main shaft part 2.

In actuality, the cam rail 722 provided on the +Y side of the rotating mechanism 4 and the cam rail 722 provided on the -Y side are symmetric with respect to a plane perpendicular to the axial direction at the center of the main shaft part 2 in the axial direction. Thus, the sliding rod 71 provided on the +Y side of the rotating mechanism 4 and the sliding rod 71 provided on the -Y side slide in opposite axial directions to each other. In other words, reaction forces acting in opposite axial directions and having approximately the same magnitude act respectively on the cam rail 722 on the +Y side and the cam rail 722 on the -Y side from the sliding rod 71 on the +Y side and the sliding rod 71 on the -Y side. Thus, the reaction forces acting on the entire frame 91, which supports both of the cam rails 722, with the movement of both of the sliding rods 71 cancel out each other. This prevents the frame 91 from tilting or falling down due to the reaction forces acting with the movement of the sliding rods 71.

As illustrated in Figs. 6 and 7, a rib member 33 that extends in the axial direction is fixed to the lower surface of each end portion (hereinafter, simply referred to as an "end portion") of the support plate 32 of the reflecting part 3 in the width direction. In actuality, the end portions of the plurality of support plates 32 arrayed in the axial direction are coupled to one another by the rib member 33. A motion transmission mechanism 73 is further provided between the rib member 33 and the sliding rod 71. The motion transmission mechanism 73 includes a lift rod 74 that is fixed to the rib member 33, and a guide part 75 that is fixed to the upper surface of the sliding rod 71. The lift rod 74 is inserted in two frame parts 743, which are provided on the adaptor plate 812 and arranged in the central normal direction, and is supported movably in the central normal direction. The lift rod 74 has a slit 741 in the lower part, and a pin member 742 that extends in the width direction is provided in the slit 741. The guide part 75 has a plate-like shape extending in the axial direction and in the central normal direction and is disposed in the slit 741 of the lift rod 74. The guide part 75 has a guide hole 751 that is long in a direction inclined relative to the axial direction, and the pin member 742 is inserted in the guide hole 751. In this way, the sliding rod 71 and the end portion of the support plate 32 of the reflecting part 3 are mechanically coupled to each other, and when the sliding rod 71 slides and moves in the axial direction, the lift rod 74 moves in the central normal direction to change the amount of deflection of the end portion of the reflecting part 3 (the amount of displacement from the state where the reflecting part 3 is not bent).

As described above, the sliding rod 71, the sliding mechanism 72 (see Fig. 3), and the motion transmission mechanism 73 implement a bending mechanism 7 for changing the amount of deflection of the reflecting part 3 in accordance with the rotation of the main shaft part 2. In actuality, the bending mechanism 7 disposed on the +X side of the main shaft part 2 and the bending mechanism 7 disposed on the -X side in Fig. 6 have the same configuration and move the opposite end portions of the reflecting part 3 by the same distance in the same direction in accordance with the rotation of the main shaft part 2. That is, the bending mechanisms 7 as a pair move both end portions of the reflecting part 3 in a similar manner in the central normal direction in accordance with the rotation of the main shaft part 2. Accordingly, the portions of the reflection surface 30 on the +X and -X sides of the central linear region 39 bend in the same manner. In Fig. 6, the reflecting part 3 that is tilted to one circumferential angular position about the central axis J1 is indicated by dashed double-dotted lines.

As described previously, the cam rail 722 on the +Y side of the rotating mechanism 4 and the cam rail 722 on the -Y side in Fig. 3 are symmetric with respect to a plane perpendicular to the axial direction at the center of the main shaft part 2 in the axial direction, and the sliding rods 71 on the +Y side of the rotating mechanism 4 and the sliding rods 71 on the -Y side slide by the same distance in opposite axial directions to each other in accordance with the rotation of the main shaft part 2. Moreover, the guide holes 751 in the guide parts 75 of the sliding rods 71 on the +Y side of the rotating mechanism 4 and the guide holes 751 in the guide parts 75 of the sliding rods 71 on the -Y side have symmetrical shapes with respect to the above plane. Thus, the amount of deflection of the end portion in the width direction of the portion of the reflecting part 3 on the +Y side of the rotating mechanism 4 is the same as the amount of deflection of the end portion in the width direction of the portion of the reflecting part 3 on the -Y side. Accordingly, deflection curves of the reflection surface 30 (curves indicating the amount of deflection at each position in the width direction) are appropriately the same over the axial direction.

In the solar heat collecting system 10 in Fig. 1, the rotating mechanisms 4 of the plurality of sunlight concentrating apparatuses 1 are controlled by a control part (not shown) in accordance with the movement of the sun. In other words, a parabola that is focusing on the position of the heat collecting part 11 and passes through the position (the center of the width direction) of the reflection surface 30 and whose symmetry axis is a straight line parallel to sunlight in a plane perpendicular to the axial direction and passing through the heat collecting part 11 is assumed for each possible altitude of the sun at the site where the solar heat collecting system 10 is installed, and the slope of the tangent to the parabola at the position of the reflection surface 30 and the curvature of the parabola at that position are acquired. Then, the main shaft part 2 is rotated so that the tilt angle at the center of the reflection surface 30 in the width direction (the position of the central linear region 39) matches the slope of the tangent to the parabola at the actual altitude of the sun. The shape of the cam rails 722 (the amount of travel of the sliding rods 71) and the shape of the guide holes 751 (the amount of travel of the lift rods 74) are further determined in accordance with the rotation angle of the main shaft part 2 so that the curvature of the reflection surface 30 is approximated to the curvature of the parabola at the actual altitude of the sun. This allows the reflection surface 30 to tilt in accordance with the movement of the sun and allows the deflection curve of the reflection surface 30 to change in accordance with the tilt of the reflection surface 30, thus enabling efficient guiding (concentrating) of (reflected light of) sunlight to the heat collecting part 11.

Here, the curvature of a typical cantilever will be described. For a cantilever with a free end to which a load W perpendicular to the lengthwise direction of the cantilever is applied, Expression 1 is satisfied on the basis of the relationship between the bending moment and the bending stress, where x is the distance from the fixed end at an arbitrary position in the lengthwise direction of the cantilever, R is the radius of curvature at that position, I is the second moment of area (the second moment of area relative to the neutral axis) at that position, E is Young's modulus (modulus of longitudinal elasticity), and L is the entire length of the cantilever in the lengthwise direction.

$$(\text{Expression } 1)$$

$$W \cdot R = E \cdot I/(L\text{-}x)$$

When a ratio between the distance (L-x) from the free end in the lengthwise direction of the cantilever and the second moment I of area (or flexural rigidity $E \cdot I$) at the position indicated by the distance in the lengthwise direction of the cantilever is made constant over the entire length of the cantilever, i.e., the second moment I of area is proportional to the distance (L-x), the radius of curvature R is constant over the entire length of the cantilever, irrespective of the magnitude of the load W (or the amount of deflection of the free end), and therefore the cantilever bends in an arc shape.

More specifically, the second moment I of area is expressed as $(b \cdot h^3/12)$, where a cross section of the cantilever perpendicular to the lengthwise direction has a rectangular shape, h is the width of the cross section in the direction of the load, and b is the width of the cross section in a direction perpendicular to the direction of the load. When the cantilever is a member having a constant width h in the direction of the load and a constant ratio between the distance (L-x) from the free end in the lengthwise direction of the cantilever and the width b in the direction perpendicular to the direction of the load at this distance, i.e., a plate member having a triangular shape as viewed in the direction of the load, the cantilever bends in an arc shape, irrespective of the magnitude of the load W (or the amount of deflection of the free end).

For example, when the Young's modulus E of this plate member is 205800 megapascals (MPa), the entire length L of the cantilever in the lengthwise direction is 587 millimeters (mm), the width (thickness) of the cantilever in the direction of the load is 3 mm, the width b in the direction perpendicular to the direction of the load (see the longitudinal axis on the right side in Fig. 8) linearly changes from 1000 mm at the fixed end to approximately 0 mm at the free end as indicated by a line A1 in Fig. 8, and the load W applied to the free end is approximately 158 newtons (N), the amount of deflection at each position in the lengthwise direction of the cantilever (see the longitudinal axis on the left side in Fig. 8) will be values indicated by circles in Fig. 8. The amount of deflection at each position in the lengthwise direction of the cantilever is on an arc A2 having a radius of curvature of 5000 mm, and the plate member bends in an arc shape over its entire length.

When a portion of each support plate 32 of the reflecting part 3 in Fig. 2 between each end portion in the width direction and the central linear region 39 is focused on as a target portion, the target portion can be taken as a cantilever where the width direction corresponds to the lengthwise direction. In this way, the lengthwise direction of the above-described cantilever corresponds to the width direction of the reflection surface 30 of the sunlight concentrating apparatus 1. The fixed end (end portion on the central linear region 39 side) of the target portion is fixed to the main shaft part 2, and the amount of deflection of the free end (end portion of the support plate 32 in the width direction) is changed by the bending mechanism 7 in accordance with the rotation of the main shaft part 2. The support plate 32 has a constant thickness and has a generally triangular portion between each end portion in the width direction and the central linear region 39, the triangular portion having a base located in the central linear region 39 and a vertex opposing the base and located in the vicinity of the end portion. That is, the width h in the direction of the load (i.e., the central normal direction) is constant, and the ratio between the distance (L-x) from the free end in the lengthwise direction of the cantilever and the width b in the direction (i.e., axial direction) perpendicular to the direction of the load at this distance is constant.

In actuality, the support plate 32, which is bonded to the mirror plates 31, is not identical to the above-described cantilever, but the reflecting part 3 including such support plates 32 can approximate the cross-sectional shape of the reflection surface 30 perpendicular to the axial direction to an arc shape, i.e., can bend the reflection surface 30 in a generally arc shape, as compared to the case where the support plates have a rectangular shape as viewed in the central normal direction. This consequently allows not only the sunlight emitted to the vicinity of the center of the reflection surface 30 in the width direction but also the sunlight emitted to the vicinity of the end portions to be efficiently guided to the heat collecting part 11, thus further improving the performance of concentrating sunlight.

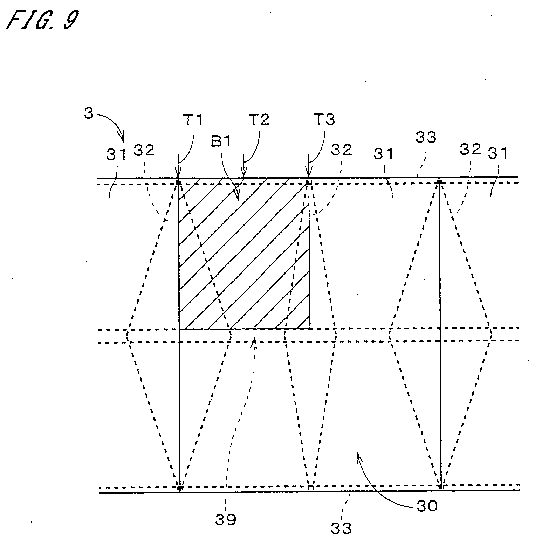

Here, the rib members 33 provided at the end portions of the reflecting part 3 will be described. Fig. 9 is a plan view of part of the reflecting part 3 and illustrates the vicinity of a single mirror plate 31. As described previously, the rib members 33 are connected to the end portions of the plurality of support plates 32 arrayed in the axial direction. The rib members 33 are also in contact with the lower surfaces of the mirror plates 31, between two support plates 32 adjacent to each other in the axial direction. That is, at the end portions of the reflecting part 3 in the width direction, the mirror plates 31 are supported by the rib members 33 in the region where the support plates 32 are not present. This suppresses deflection of the mirror plates 31 under their own weight between the plurality of support plates 32.

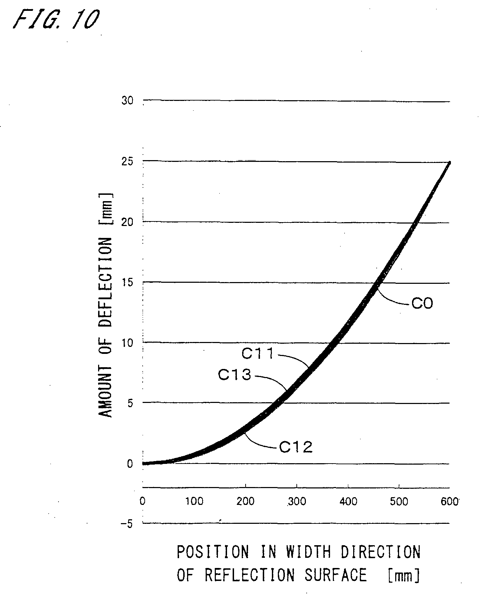

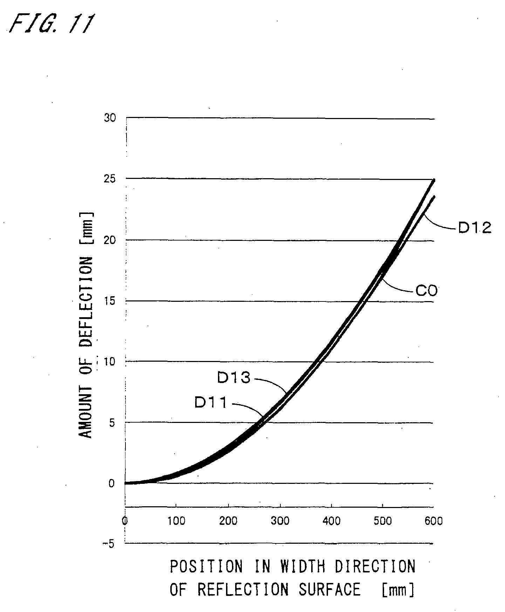

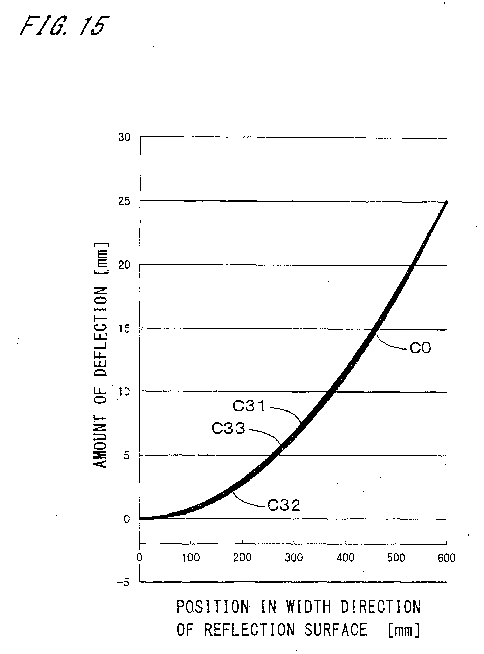

Fig. 10 illustrates deflection curves of the reflection surface 30 obtained through finite-element analysis conducted on a diagonally hatched region B1 of the reflecting part 3 in Fig. 9, and Fig. 11 illustrates deflection curves of the reflection surface 30 obtained through finite-element analysis conducted on the region B1 of the reflecting part 3 when the rib members 33 are omitted. The vertical axes in Figs. 10 and 11 indicate the amount of deflection of the reflection surface 30. The horizontal axes indicate the position in the width direction, with the vicinity of the 0-mm position corresponding to a portion in the vicinity of the central linear region 39, and the vicinity of the 600-mm position corresponding to the end portion of the reflecting part 3. The length of the region B1 in the width direction is 600 mm, and the length thereof in the axial direction is 500 mm. The mirror plates 31, the support plates 32, and the rib members 33 are respectively made of glass, aluminum, and carbon steel (SS400) and respectively have thicknesses of 0.95 mm, 0.6 mm, and 3.2 mm. The amount of deflection (the amount of lift by the bending mechanisms 7) of the end portions of each support plate 32 is 25 mm. The deflection curves at axial positions indicated by arrows with reference signs T1, T2, and T3 in Fig. 9 are respectively given reference signs C11, C12, and C13 in Fig. 10 and are respectively given reference signs D11, D12, and D13 in Fig. 11. In Figs. 10 and 11, an ideal arc is indicated by a reference sign C0 (the same applies to Fig. 15 described later).

As illustrated in Fig. 11, even when the rib members 33 are omitted, the deflection curves D11 to D 13 approximately coincide with the ideal arc C0 in the range from the 0-mm position to the 500-mm position in the axial direction. In the vicinity of the 600-mm position, however, the deflection curve D12 at the axial position T2 where the mirror plate 31 is not in contact with the support plate 32 is approximately 1.4 mm away from the ideal arc C0. In contrast, in the case where the rib members 33 are provided, the deflection curves C11 to C13 approximately coincide with the ideal arc C0 in the entire range in the width direction from the 0-mm position to the 600-mm position as illustrated in Fig. 10. Note that a maximum distance between the deflection curves C11 to C 13 and the ideal arc C0 is approximately 0.4 mm.

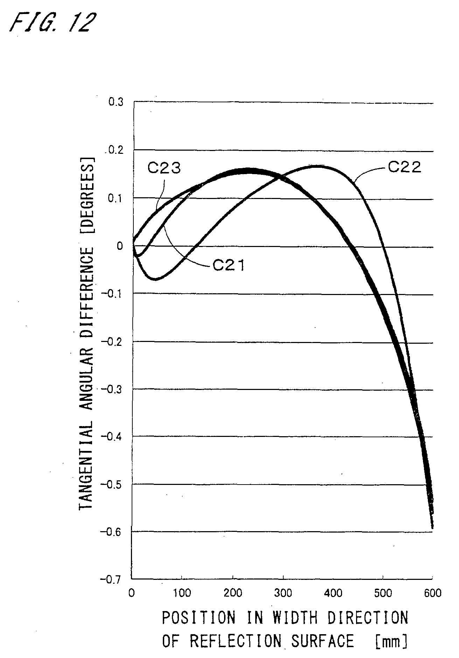

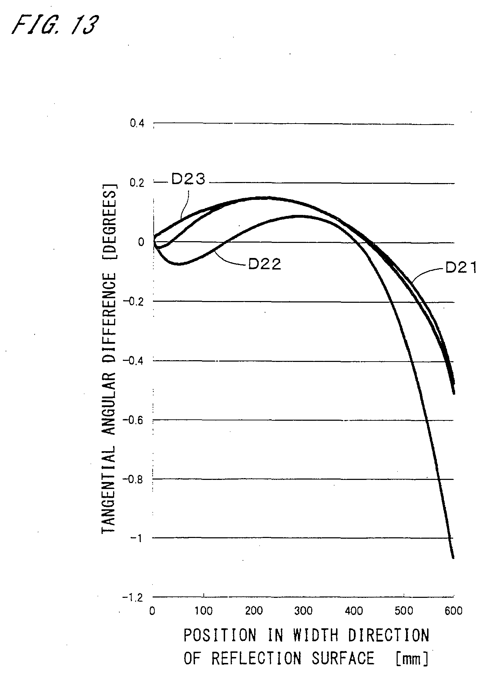

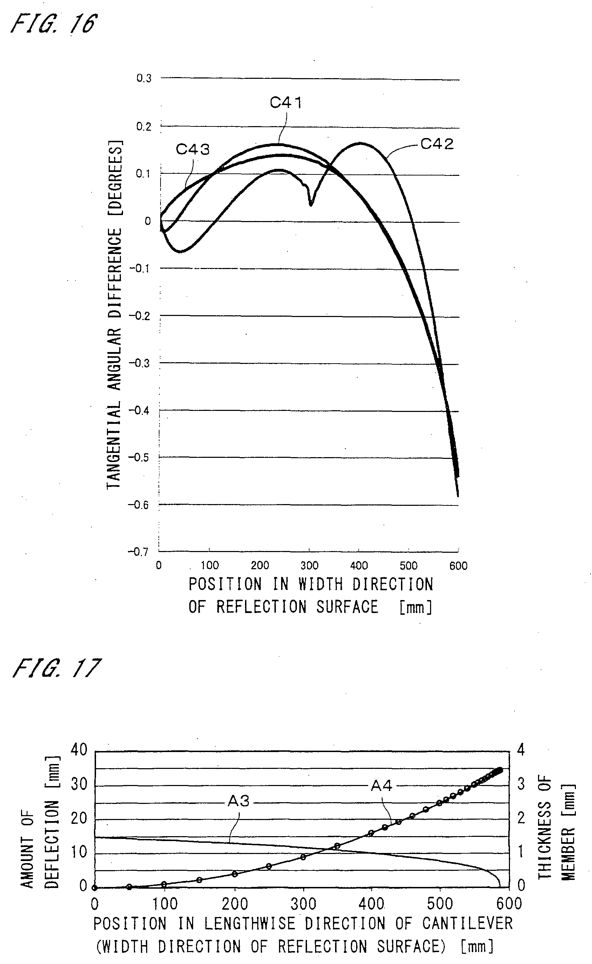

Fig. 12 illustrates differences (hereinafter, referred to as "tangential angular differences") between the angles of tangents to the deflection curves C11 to C13 and the angle of a tangent to the ideal arc C0 at each position in the width direction in Fig. 10, and Fig. 13 illustrates differences (tangential angular differences) between the angles of tangents to the deflection curves D11 to D 13 and the angle of a tangent to the ideal arc C0 at each position in the width direction in Fig. 11. In Figs. 12 and 13, the vertical axes indicate the tangential angular difference, and the horizontal axes indicate the position in the width direction. In Fig. 12, lines indicating tangential angular differences that correspond respectively to the deflection curves C11 to C13 are respectively given reference signs C21, C22, and C23, and in Fig. 13, lines indicating tangential angular differences that correspond respectively to the deflection curves D11 to D13 are respectively given reference signs D21, D22, and D23 (the same applies to Fig. 16 described later).

In Figs. 12 and 13, the magnitudes (absolute value) of the tangential angular differences become a maximum in the vicinity of position 600 mm in the width direction. More specifically, when the rib members 33 are omitted, the magnitude of the tangential angular difference at the axial position T2 in the vicinity of position 600 mm is approximately one degree as illustrated in Fig. 13 (see the line D22). In contrast, when the rib members 33 are provided, the magnitude of the tangential angular difference at either of the axial positions T1 to T3 in the vicinity of position 600 mm is less than 0.6 degrees as illustrated in Fig. 12. The reflecting part 3 including the rib members 33 can thus more efficiently concentrate sunlight onto the heat collecting part 11.

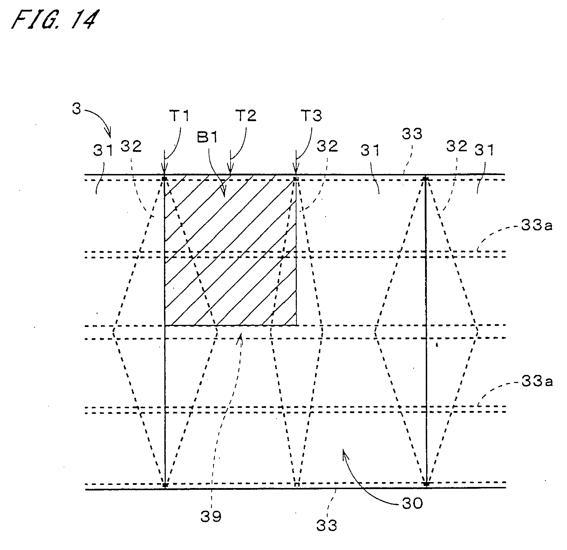

Fig. 14 illustrates another example of the reflecting part 3. The reflecting part 3 in Fig. 14 includes another rib member 33a between the rib member 33 provided at each end portion in the width direction and the central linear region 39. Like the rib members 33, the rib members 33a are also connected to the generally triangular portions of the plurality of support plates 32 arrayed in the axial direction. In the space between the generally triangular portions of two support plates 32 adjacent to each other in the axial direction, the rib members 33a are in contact with the lower surfaces of the mirror plates 31. The reflecting part 3 including the rib members 33 and 33a can more firmly support the mirror plates 31.

Fig. 15 illustrates deflection curves obtained through finite-element analysis conducted on a diagonally hatched region B1 of the reflecting part 3 in Fig. 14. In Fig. 15, the deflection curves at axial positions indicated by arrows with reference signs T1, T2, and T3 in Fig. 14 are respectively given reference signs C31, C32, and C33. Fig. 16 illustrates differences (tangential angular differences) between the angles of tangents to the deflection curves C31 to C33 at each position in the width direction in Fig. 15 and the angle of a tangent to an ideal arc C0. In Fig. 16, lines indicating the tangential angular differences that correspond respectively to the deflection curves C31 to C33 are respectively given reference signs C41, C42, and C43.

As illustrated in Fig. 15, the reflecting part 3 including the rib members 33 and 33a in Fig. 14 allows the deflection curves C31 to C33 to approximately coincide with the ideal arc C0 in the entire range from the 0-mm position to the 600-mm position mm in the axial direction, like the reflecting part 3 in Fig. 9. The magnitudes of the tangential angular differences even in the vicinity of the 600-mm position are less than 0.6 degrees as illustrated in Fig. 16. To be specific, the reflecting part 3 in Fig. 14 can suppress the magnitude of the tangential angular difference to a value less than or equal to 0.2 degrees in approximately a 90% range in the width direction from the 0-mm position to the 600-mm position. Thus, sunlight can more efficiently be concentrated onto the heat collecting part 11.

The reflecting part 3 in Fig. 9 may include a rib member 33 at only a position distanced from each end portion between the end portion and the central linear region 39. In the sunlight concentrating apparatus 1, when the plurality of support plates 32 arranged in the axial direction with a space therebetween are laid on the rectangular mirror plates 31 whose sides are parallel to the axial direction and the width direction, at least one rib member that is connected to the generally triangular portions of the plurality of support plates 32 and in contact with the mirror plates 31 is provided at a position distanced in the width direction from the central linear region 39. This suppresses deflection of the mirror plates 31 under their own weight between the plurality of support plates 32 and allows sunlight to be efficiently concentrated onto the heat collecting part 11. If a plurality of (three or more than three) rib members are provided, the deflection of the mirror plates 31 under their own weight between the plurality of support plates 32 can be further suppressed.

The technique for easily bending the reflection surface 30 in a generally arc shape by making the ratio between the distance of each end portion of the support plates 32 in the width direction and the second moment of area at this distance constant between the end portion and the central linear region 39 may be implemented by changing the width h in the direction of the load (the thickness in the central normal direction). As described previously, the second moment I of area of a rectangular cross section is expressed as $(b \cdot h^3/12)$. Thus, when a member that has a constant width b in the direction perpendicular to the direction of the load and that has a constant ratio between the distance (L-x) from the free end in the lengthwise direction of the cantilever and the cube of the width h in the direction of the load at this distance is used as a cantilever, this member can bend in an arc shape, irrespective of the magnitude of the load w (or the amount of deflection of the free end).

For example, when the Young's modulus E of this member is 205800 MPa, the entire length L of the cantilever in the lengthwise direction is 587 mm, the width b of the cantilever in the direction perpendicular to the direction of the load is 1000 mm, the width h in the direction of the load (the thickness of the member; see the longitudinal axis on the right side in Fig. 17) changes from the fixed end to the free end as indicated by line A3 in Fig. 17, and the load W applied to the free end is approximately 237 N, the amount of deflection at each position in the lengthwise direction of the cantilever (see the longitudinal axis on the left side in Fig. 17) will be values indicated by circles in Fig. 17. The amount of deflection at each position in the lengthwise direction of the cantilever is on an arc A4 having a radius of curvature of 5000 mm, and the member bends in an arc shape over its entire length.

Thus, when the support plates having a rectangular shape as viewed in the central normal direction, like the mirror plates 31, are employed and the thickness of the target portions of the support plates in the direction of the load (central normal direction) are changed as indicated by line A3 in Fig. 17, the cross-sectional shape of the reflection surface 30 perpendicular to the axial direction can be approximated to an arc shape, i.e., the reflection surface 30 can be bent in a generally arc shape, as compared to the case of using rectangular support plates having a constant thickness. Consequently, sunlight can more efficiently be concentrated onto the heat collecting part 11.

As can be seen from Expression 1, the sunlight concentrating apparatus 1 can approximate the cross-sectional shape of the reflection surface 30 more closely to an arc shape by making the ratio between the distance from each end portion in the width direction and the flexural rigidity (i.e., the product of the second moment I of area and the Young's modulus E) of the reflecting part as a whole at this distance constant between the end portion and the central linear region 39. The following is a description of such a reflecting part.

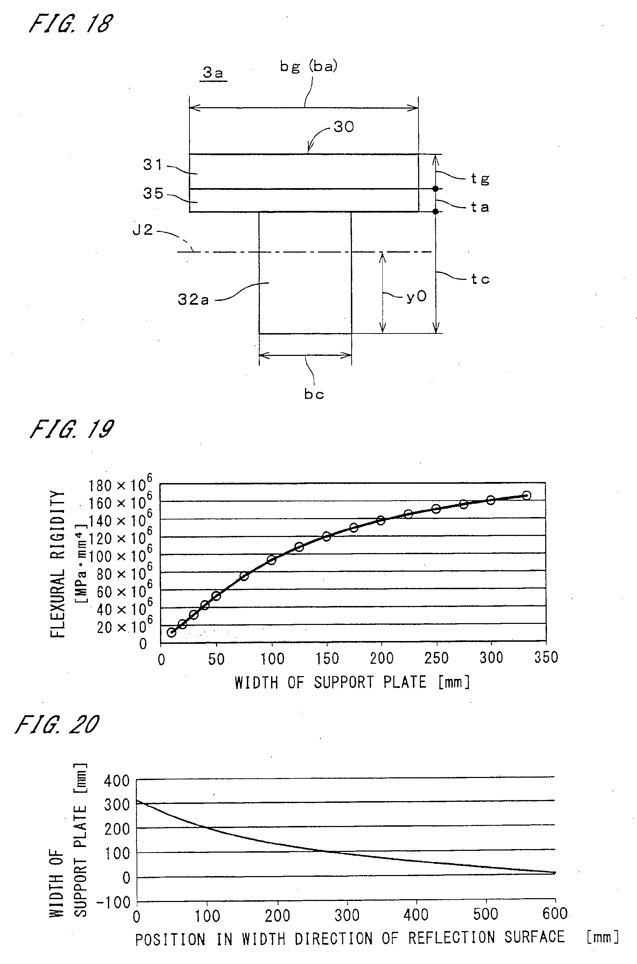

Fig. 18 is a cross-sectional view of another example of the reflecting part and illustrates a cross section of a reflecting part 3a taken perpendicular to the width direction. In Fig. 18, the neutral axis in the cross section of the reflecting part 3 a is indicated by a dashed dotted line with a reference sign J2. The reflecting part 3a has a three-layer structure of a mirror plate 31, a rear plate 35, and a support plate 32a, each member having a rectangular cross-sectional shape. For example, the mirror plate 31 is made of glass, the rear plate 35 is made of aluminum, and the support plate 32a is made of carbon steel. The reflecting part 3a differs only in that the width of the support plate 32a in the axial direction (width in the lateral direction in Fig. 18) is changed in order to make the ratio between the distance in the width direction from each end portion in the width direction and the flexural rigidity of the reflecting part 3a as a whole at this distance constant between the end portion and the central linear region 39. Note that the mirror plate 31 and the rear plate 35 have the same shape as viewed in the central normal direction. The mirror plate 31, the rear plate 35, and the support plate 32a each have a constant thickness over the width direction.

It is assumed here that when the portion of the reflecting part 3a between the end portion in the width direction and the central linear region 39 is taken as a single cantilever, a cross section of the cantilever taken perpendicular to the axis line (i.e., the axis line extending in the longitudinal direction of the cantilever) remains in a flat plane perpendicular to the axial line even after the reflecting part 3a is bent and deformed by the bending mechanisms 7. At this time, the bending strain $\varepsilon$ can be expressed as ($\varepsilon = y/R$) because it is proportional to a distance y from the neutral axis J2 (neutral plane) and inversely proportional to the radius of curvature (bend radius) R. The bending stress $\sigma g$ on the mirror plate 31 is obtained as the product of the Young's modulus Eg of the mirror plate 31 and the bending strain $\varepsilon$ and thus can be expressed as ($\sigma g = Eg \cdot y/R$). Similarly, the bending stress $\sigma a$ on the rear plate 35 can be expressed as ($\sigma a = Ea \cdot y/R$), and the bending stress $\sigma c$ on the support plate 32a can be expressed as ($\sigma c = Ec \cdot y/R$), where Ea and Ec are respectively the Young's moduli of the rear plate 35 and the support plate 32a.

As described above, the bending stress linearly changes with respect to the distance y from the neutral axis J2. Thus, an integral value of stresses in the entire cross section of each member, including the mirror plate 31, the rear plate 35, and the support plate 32a, can be obtained by multiplying the stress (i.e., average stress) at the center of the member in the thickness direction by the thickness and the axial width of the member. Thus, an integral value of stresses in the entire cross section of the mirror plate 31 can be expressed as (tg· bg· Eg· ((tg/2)+ta+tc-y0)/R), an integral value of stresses in the entire cross section of the rear plate 35 can be expressed as (ta· ba· Ea· ((ta/2)+tc-y0)/R), and an integral value of stresses in the entire cross section of the support plate 32a can be expressed as (tc· bc· Ec· ((tc/2)-y0)/R), by using the thickness tg and width bg of the mirror plate 31, the thickness ta and width ba of the rear plate 35, the thickness tc and width bc of the support plate 32a, and the distance y0 from the lower end of the support plate 32a to the neutral axis J2. Expression 2 is obtained by setting the sum of these integral values to zero and simplifying the sum with respect to y0. In Expression 2, Kg is (tg· bg· Eg), Ka is (ta· ba· Ea), and Kc is (tc· bc· Ec).

(Expression 2)

$$y0=\{Kg((tg/2)+ta+tc)+Ka((ta/2)+tc)+Kc\cdot tc/2\}/(Kg+Ka+Kc)$$

Thus, Expression 2 yields the distance y0 from the lower end of the support plate 32a to the neutral axis J2 when the thickness tg and width bg of the mirror plate 31, the thickness ta and the width ba of the rear plate 35, and the thickness tc of the support plate 32a are made constant and the width bc of the support plate 32a is an arbitrary value. This distance y0 indicating the position of the neutral axis J2 is then used to obtain the flexural rigidity of the mirror plate 31, the flexural rigidity of the rear plate 35, and the flexural rigidity of the support plate 32a, and the sum of the values of the flexural rigidity is obtained as the flexural rigidity of the reflecting part 3a as a whole. The relationship between the width bc of the support plate 32a and the flexural rigidity of the reflecting part 3 a as a whole is as illustrated in Fig. 19, where the Young's modulus Eg of the mirror plate 31 is 80000 MPa, the thickness tg thereof is 0.93 mm, the width bg thereof is 333 mm, the Young's modulus Ea of the rear plate 35 is 69000 MPa, the thickness ta thereof is 0.6 mm, the width ba thereof is 333 mm, the Young's modulus Ec of the support plate 32a is 200000 MPa, and the thickness tc thereof is 3.2 mm. As the width of the support plate 32a decreases, the position of the neutral axis J2 is closer to the mirror plate 31, and the flexural rigidity of the reflecting part 3a as a whole sharply decreases.

When the length of the portion of the reflecting part 3a between the end portion in the width direction and the central linear region 39 is 630 mm and the load W applied to the end portion is 99.9 N, the distribution of the width bc of the support plate 32a in order to fix the radius of curvature R of the reflection surface 30 to a constant value of 5400 mm can be obtained on the basis of the relationship expressed by Expression 1 and illustrated in Fig. 19 and will be as illustrated in Fig. 20. In other words, when the width (axial width) of the support plate 32a of the reflecting part 3a at each position in the width direction (position from the central linear region 39) is set in accordance with Fig. 20, the ratio between the distance from the end portion in the width direction and the flexural rigidity of the reflecting part 3a as a whole at this distance is constant. In actuality, if the load w applied to the end portion is changed in accordance with a necessary curvature (reciprocal of the radius of curvature R) in order to make constant the product of the load w applied to the end portion and the radius of curvature R, approximately the entire reflection surface 30 can be bent with that curvature.

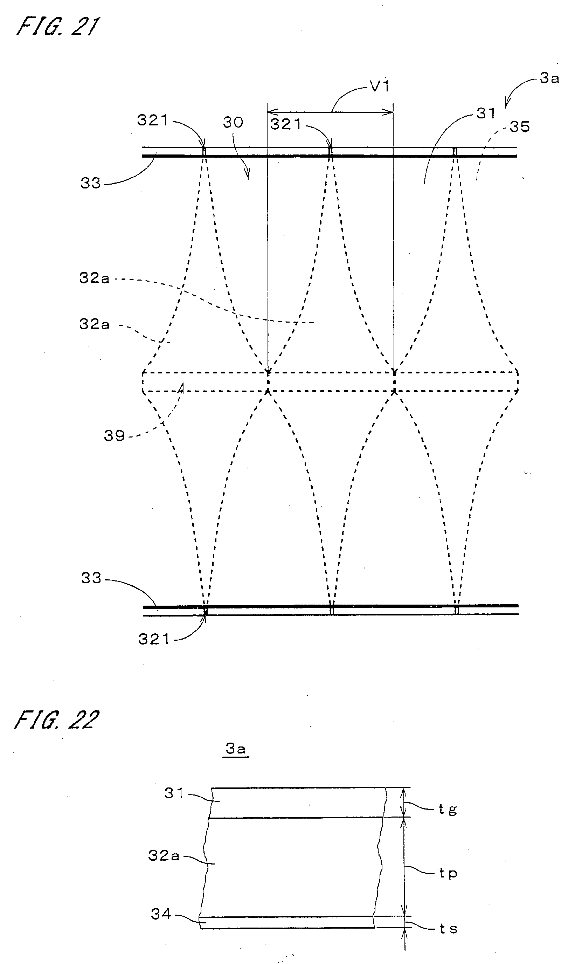

Fig. 21 is a plane view of the reflecting part 3a. The actual reflecting part 3a is configured such that a plurality of support plates 32a densely arranged in the axial direction (lateral direction in Fig. 21) are fixed to a single mirror plate 31 and a single rear plate 35. The cross section of the reflecting part 3a in Fig. 18 corresponds to a cross section of the reflecting part 3a taken perpendicular to the width direction (longitudinal direction in Fig. 21) in an axial range indicated by arrow with a reference sign V1 in Fig. 21, i.e., in a range where a single support plate 32a is present.

In the reflecting part 3a illustrated in Fig. 21, the lengths of the portions of the mirror plate 31 and the rear plate 35 between each end portion in the width direction and the central linear region 39 are 600 mm. On the other hand, the length of the portion of the support plate 32a between each end portion 321 in the width direction and the central linear region 39 is 630 mm. In the case of the support plate 32a, the axial width of the portion from the central linear region 39 to the 600-mm position in the width direction satisfies the relationship illustrated in Fig. 20, whereas the axial width of the end portions 321 that protrude outward of the end portions of the mirror plate 31 and the rear plate 35 is constant, for example. The rib members 33 extending in the axial direction are fixed to the end portions 321 of the support plates 32a. That is, the end portions 321 of the support plates 32a are moved in the central normal direction by the bending mechanisms 7 (see Fig. 7). The edges (right and left curved edges in Fig. 21) of each support plate 32a on opposite sides in the axial direction are symmetric. The plurality of support plates 32a arrayed in the axial direction are of the same shape. The plurality of support plates 32a may be formed as an integral plate member.

As described above, in the sunlight concentrating apparatus 1, the support plates 32a have a portion whose width in the axial direction gradually increases from each end portion of the reflecting part 3a in the width direction toward the central linear region 39 in order to make the ratio between the distance in the width direction from the end portion and the flexural rigidity of the reflecting part 3a at this distance approximately constant between the end portion and the central linear region 39. This allows the reflection surface 30 to be bent to more closely approximate an arc shape. Consequently, the performance of concentrating sunlight onto the heat collecting part 11 can be further improved.

Here, assume the case in which the mirror plate 31 and the rear plate 35 of the reflecting part 3a in Fig. 21 have the same length in the width direction as the support plate 32a (i.e., the end portions 321 of the support plates 32a do not protrude outward of the end portions of the mirror plate 31). In this case, in order to bend the reflection surface 30 in an accurate arc shape even in the vicinity of the opposite edges of the mirror plate 31 in the width direction, the axial width of the end portions of the support plates 32a to which the load is applied needs to be zero, but it is not possible to apply a load to portions having a width of zero. Thus, for the above-assumed reflecting part, the vicinity of the opposite edges of the mirror plate 31 in the width direction cannot be bent in an accurate arc shape.

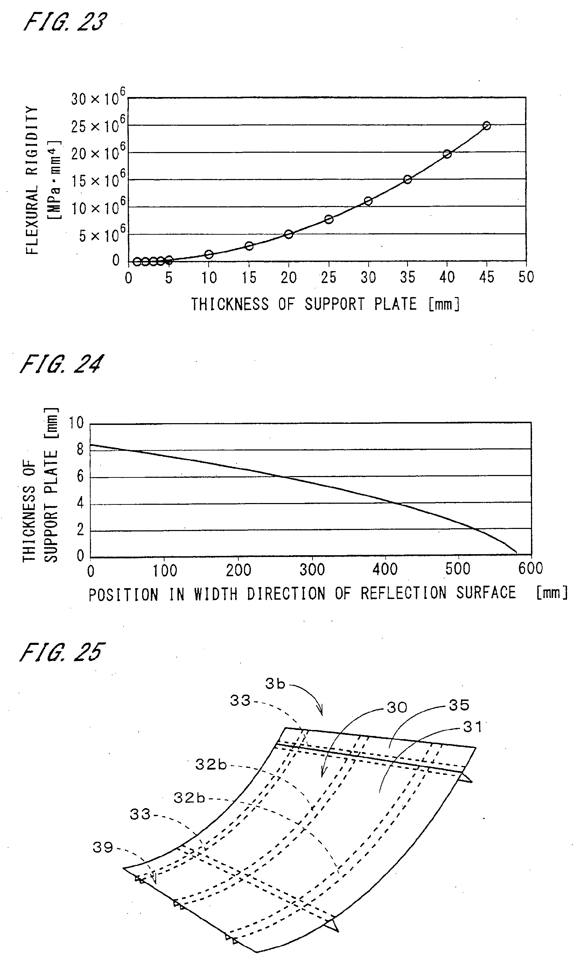

In contrast, for the reflecting part 3a illustrated in Fig. 21, the end portions 321 of the support plates 32a in the width direction are located outward of the end portions of the mirror plate 31, and the pair of bending mechanisms 7 move the end portions 321 of the support plates 32a in the central normal direction. Thus, the reflection surface 30 can be (ideally) bent in an accurate arc shape even in the vicinity of the opposite edges of the mirror plate 31 in the width direction, i.e., the reflection surface 30 of the mirror plate 31 as a whole can be bent in an accurate arch shape. This technique of using the support plates whose opposite end portions protrude outward of the opposite end portions of the mirror plate 31 may be employed in the reflecting part 3 that uses the triangular support plates 32 or in reflecting parts that use support plates whose thicknesses change in the width direction (see Fig. 17 and Fig. 24 described later).

Note that the support plate 32a may have edges on both sides in the axial direction that are asymmetric while having an axial width that satisfies the relationship illustrated in Fig. 20. While the reflecting part 3a can improve handling of the mirror plate 31 and the efficiency of assembly of the sunlight concentrating apparatus 1 by providing the rear plate 35 on the lower surface of the mirror plate 31, the rear plate 35 may be omitted depending on the design of the sunlight concentrating apparatus 1.

Fig. 22 is a cross-sectional view of yet another example of the reflecting part. A reflecting part 3a illustrated in Fig. 22 has a three-layer structure of a mirror plate 31, a support plate 32a, and an auxiliary plate 34 (a structure for sandwiching the support plate 32a). For example, the mirror plate 31 is made of glass or the like, the support plate 32a is a resin foam (here, polyurethane foam), and the auxiliary plate 34 is a resin plate. In the reflecting part 3a, only the thickness of the support plate 32a is changed in order to make the ratio between the distance in the width direction from each end portion in the width direction and the flexural rigidity of the reflecting part 3a as a whole at this distance constant between the end portion and the central linear region 39. Note that the mirror plate 31, the support plate 32a, and the auxiliary plate 34 have the same shape (e.g., the same rectangular shape) as viewed in the central normal direction.

When, for example, the axial length of the reflecting part 3a is 1 mm, the relationship between the thickness tp of the support plate 32a and the flexural rigidity of the reflecting part 3a as a whole can be obtained in the same manner as in Fig. 19 and will be as illustrated in Fig. 23, where the Young's modulus of the mirror plate 31 is 80000 MPa, the Young's modulus of the support plate 32a is 100 MPa, the Young's modulus of the auxiliary plate 34 is 5000 MPa, the thickness tg of the mirror plate 31 is 0.93 mm, and the thickness ts of the auxiliary plate 34 is 2 mm.

When, in the reflecting part 3a, the axial length is 1 m, the length of the portion between each end portion in the width direction and the central linear region 39 is 600 mm, and the load W applied to the end portion is approximately 300 N, the distribution of the thickness tp of the support plate 32a in order to fix the radius R of curvature of the reflection surface 30 to a constant value of 6000 mm can be obtained in the same manner as in Fig. 20 and will be as illustrated in Fig. 24.

Incidentally, in the distribution of thickness indicated by the line A3 in Fig. 17, the change in thickness is very small, and even a slight error in thickness affects the deflection of the reflection surface 30. In contrast, with the support plate 32a having the distribution of thickness in Fig. 24, the change in thickness tp can be increased by relatively lowering the Young's modulus, and the influence of an error in thickness on the deflection of the reflection surface 30 can thereby be reduced. In other words, the tolerance during manufacture of the support plate 32a can be increased, and this facilitates the manufacture of the support plate 32a. From this viewpoint, the Young's modulus of the support plate 32a is preferably less than or equal to one tenth of the Young's modulus of the mirror plate 31, and is more preferably less than or equal to one hundredth thereof (practically, greater than or equal to 1/10000).

In the manufacture of the reflecting part 3a, for example, a lower mold having an inner shape that follows the distribution of thickness in Fig. 24 and an upper mold having a flat inner shape are prepared. Next, the mirror plate 31 is mounted on the inner surface of the upper mold, and the auxiliary plate 34 is mounted on the inner surface of the lower mold. Then, a liquid material for forming support plates is poured into the space between the mirror plate 31 and the auxiliary plate 34 and hardened. This allows easy manufacture of the reflecting part 3a.

As described above, in the sunlight concentrating apparatus 1, the support plates 32a have a portion whose thickness gradually increases from each end portion of the reflecting part 3a in the width direction toward the central linear region 39 in order to make the ratio between the distance in the width direction from the end portion and the flexural rigidity of the reflecting part 3a at this distance approximately constant between the end portion and the central linear region 39. This allows the reflection surface 30 to be easily bent in a generally arc shape. In addition, the support plates 32a are made of a material having a lower Young's modulus than the mirror plate 31. This increases a change in the thickness of the support plate 32a, thus allowing easy manufacture of the support plate 32a.

Note that, depending on the design of the reflecting part 3a, the linear relationship between the distance in the width direction from each end portion and the flexural rigidity of the reflecting part at this distance may be satisfied by further changing the thicknesses of the mirror plate 31 and the auxiliary plate 34 (i.e., changing the thicknesses of some or all of the plate members of the reflecting part 3a). In addition to the above change in thickness, the axial width of the support plates 32a or the auxiliary plate 34 may be changed. Moreover, the auxiliary plate 34 may be omitted from the reflecting part 3a, and the reflecting part 3a may be formed of four or more layers.

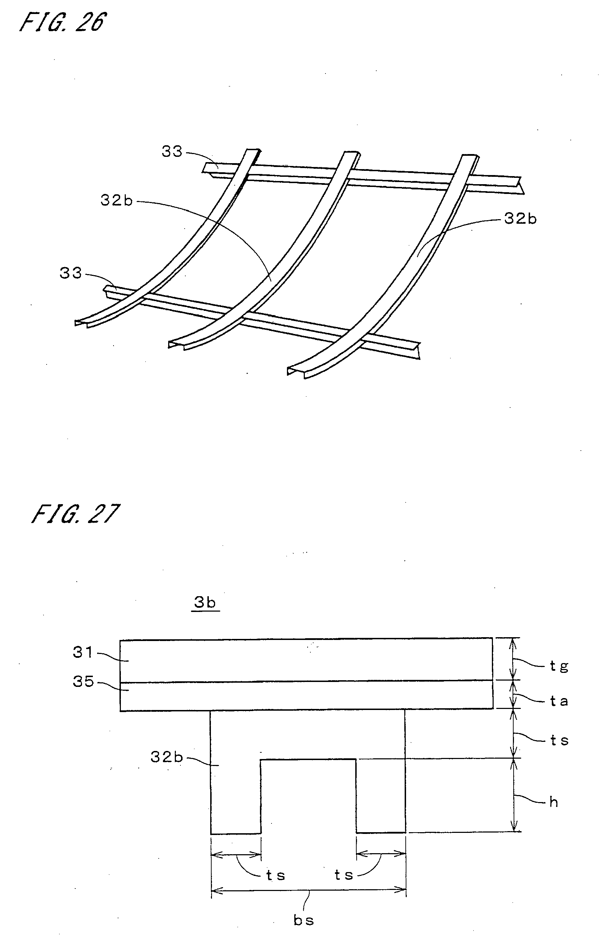

While the above-described sunlight concentrating apparatus 1 uses the support plates 32 or 32a, support beams that extend in the width direction may be used instead of the support plates 32 or 32a. Fig. 25 is a perspective view of a reflecting part 3b including support beams 32b, and Fig. 26 is a perspective view of the support beams 32b and rib members 33 of the reflection part 3b. Figs. 25 and 26 illustrate a portion from the center (central linear region 39) to one end portion in the width direction (the same applies to Figs. 28, 30.A, 30.B, 33, and 34 described later). Fig. 27 is a cross-sectional view of the reflecting part 3b and illustrates a cross section of the reflecting part 3b taken perpendicular to the width direction.

The reflecting part 3b includes a mirror plate 31, a rear plate 35, the support beams 32b, and the rib members 33. The rear plate 35, the support beams 32b, and the rib members 33 are made of aluminum or steel, for example. The cross sections of the mirror plate 31 and the rear plate 35 perpendicular to the width direction have a rectangular shape. The cross section of the support beams 32b perpendicular to the width direction has a C shape that opens downward, and the support beams 32b are so-called C-shaped beams. In the reflecting part 3b, only the height of the support beams 32b in the central normal direction (height in the direction indicated by an arrow V2 in Fig. 28) is changed, as illustrated in Fig. 28, in order to make the ratio between the distance in the width direction from each end portion in the width direction and the flexural rigidity of the reflecting part 3b as a whole at this distance constant between the end portion and the central linear region 39. Note that the cross-sectional shapes of the mirror plate 31 and the rear plate 35 remain constant over the width direction. The rib members 33 extending in the axial direction have, for example, a "T-shaped" cross-section perpendicular to the axial direction, and this shape remains constant over the axial direction.

For convenience of description, it is assumed here that the axial length of the reflecting part 3b is 1 m and the reflecting part 3b is provided with two support beams 32b arrayed in the axial direction. In this case, the relationship between the height h of the support beams 32b (the height excluding the plate thickness ts as illustrated in Fig. 27; the same applies below) and the flexural rigidity EI of the reflecting part 3a as a whole can be obtained as ($EI = 1.03h^5 - 377.88h^4 + 145535.88h^3 + 1012938.62h^2 + 2320440.49h + 45148140.06$) in the same manner as described above, where the Young's modulus of the mirror plate 31 is 80000 MPa, the Young's modulus of the support beams 32b is 69000 MPa, the Young's modulus of the rear plate 35 is 69000 MPa, the thickness tg of the mirror plate 31 is 0.93 mm, the thickness ta of the rear plate 35 is 0.6 mm, the plate thickness ts of the support beams 32b is 1.6 mm, and the axial width bs of the support beams 32b is 45 mm.

Thus, when, in the reflecting part 3b, the length of the portion between each end portion in the width direction and the central linear region 39 is 600 mm and the load W applied to the end portion per one meter of the axial length is approximately 200 N (20.4 kgf), the distribution of the height h of the support beams 32b in order to set the radius R of curvature of the reflection surface 30 to a constant value of 5400 mm is as illustrated in Fig. 29. For the actual support beams 32b, the height h in the vicinity of the end portions in the width direction (in the vicinity of 600-mm position in the width direction) remains constant at several millimeters. In this way, the support beams 32b have a portion whose height in the central normal direction gradually increases from the end portions toward the central linear region 39.

As described above, the reflecting part 3b is provided with the support beams 32b for supporting the mirror plate 31 from the underside, and the support beams 32b has a cross-sectional shape that is perpendicular to the width direction and that gradually changes along the width direction so that the ratio between the distance in the width direction from each end portion of the reflecting part 3b in the width direction and the flexural rigidity of the reflecting part 3b at this distance remains constant between the end portion and the central linear region 39. This allows the reflection surface 30 to be bent in a generally arc shape. By using the support beams 32b having a C-shaped cross-section, it is possible to achieve high rigidity with a small cross-sectional area and to reduce the weight of the reflecting part 3b as compared to the case of using the support plates (e.g., the weight of the reflecting part is one- to three-tenths of the weight in the case of using the triangular support plates). In addition, C-shaped beams having a constant height are readily available in the market and are relatively low cost. The support beams 32b can thus be manufactured easily at low cost by applying a simple process on such C-shaped beams (for example, the manufacturing cost can be reduced one-third in the case of manufacturing triangular support plates), and therefore, the manufacturing cost of the sunlight concentrating apparatus 1 can be reduced. In the region of the reflecting part 3b where the support beams 32 are not present, the mirror plate 31 is supported by the rib members 33. This suppresses deflection of the mirror plate 31 under its own weight between the plurality of support beams 32b.

The cross-sectional shape of the support beams 32b is not limited to the shape illustrated in Fig. 27, and may be other shapes. For example, support beams 32b having a T-shaped cross-sectional shape as illustrated in Fig. 30.A may be used. The support beam 32b in Fig. 30.A also has a portion whose height in the central normal direction gradually increases from the end portions in the width direction toward the central linear region 39. Depending on the cross-sectional shape, the support beams 32b may have a portion whose axial width gradually increases from the end portions in the width direction toward the central linear region 39. Moreover, both the width and height of cross sections of the support beams 32b may change along the lengthwise direction of the support beams 32b (the width direction of the reflection surface in the sunlight concentrating apparatus 1). For example, a support beam 32b illustrated in Fig. 30.B has a C-shaped cross-section, and both of the height and width of the cross section gradually change along the lengthwise direction of the support beam 32b. More specifically, the height of the cross section is high and the width is narrow in the vicinity of the central linear region 39 of the support beams 32b. In the vicinity of the end portions, on the other hand, the height of the cross section is low and the width is wide. The support beam 32b in Fig. 30.B can easily be manufactured in, for example, a single process of press forming performed on a strip plate member having a constant width, and since no other processes such as cutting is necessary, the material can be used with no waste. For the reflecting part 3b using the support beams 32b, the ratio between the distance in the width direction from each end portion of the reflecting part 3b in the width direction and the flexural rigidity of the reflecting part 3b at this distance also remains constant between the end portion and the central linear region 39.

While, in the case of the support plates 32 and 32a and the support beams 32b described above, the cross-sectional shape changes smoothly and continuously along the width direction, the cross-sectional shape of the support plates 32 and 32a and the support beams 32b may change roughly (in stages) along the width direction. Fig. 31 illustrates another example of the distribution of the height h of the support beams 32b in Fig. 27. For the support beam 32b, the height h changes in a polyline form between each end portion of the reflecting part 3b in the width direction (position at which the bending mechanisms 7 lift up the reflecting part 3b; here, in the vicinity of the 600-mm position in the width direction in Fig. 31) and the central linear region 39 (in the vicinity of the 0-mm position in the width direction in Fig. 31). In the reflecting part 3b including such support beams 32b, when the portion between the end portion and the central linear region 39 is divided into a plurality of sections U of a constant width in the width direction, the ratio between the distance in the width direction from the end portion to the center of each section U and an average value of the flexural rigidity of the reflecting part 3b in the section U is approximately constant in the plurality of sections U. In this case as well, the reflection surface 30 can be bent in a generally arc shape.

Fig. 32 illustrates tangential angular differences between the angle of a tangent to the deflection curve at each position of the reflecting part 3b in the width direction and the angle of a tangent to an ideal arc. Fig. 32 corresponds to Figs. 12, 13 and 16, and the deflection curves are obtained through finite-element analysis. In the finite-element analysis, the axial width of the reflecting part 3b is assumed to be 1000 mm, and in Fig. 32, lines indicating changes in tangential angular difference at positions that are respectively spaced by 0 mm, 250 mm, and 500 mm from one end in the axial direction are respectively given reference signs F1, F2, and F3.

The support beams 32b in Fig. 31 can suppress the magnitude of the tangential angular difference to less than or equal to 0.2 degrees at any axial position in the range from the 0-mm position to the 550-mm position in the width direction, i.e., in an approximately 92% range of the entire length of the mirror plate 31 in the width direction. Thus, sunlight can efficiently be concentrated onto the heat collecting part 11. Note that the number of sections U between each end portion and the central linear region 39 in order to satisfy the condition that the ratio between the distance in the width direction from the end portion to each section U and the average value of the flexural rigidity of the reflecting part 3b in the section U is approximately constant in the plurality of sections U is, example, three or more, and preferably five or more (e.g., 20 or less).

Figs. 33 and 34 are perspective views of other examples of the support beams 32b. The support beam 32b illustrated in Fig. 33 has a C-shaped cross-sectional shape and has a plurality of circular through holes 322 in opposite side portions parallel to the central normal direction and the width direction (the longitudinal direction of the support beam 32b). The plurality of through holes 322 are arrayed at a fixed pitch in the width direction, and the diameters of the plurality of through holes 322 gradually decrease from the vicinity of the end portions of the support beam 32b in the width direction toward the central linear region 39, excluding the end portions. The support beam 32b illustrated in Fig. 34 has a T-shaped cross-sectional shape and has a plurality of circular through holes 322 in a portion that is parallel to the central normal direction and the width direction. The plurality of through holes 322 are arrayed at a fixed pitch in the width direction, and the diameters of the plurality of through holes 322 gradually decrease from the vicinity of the end portions of the support beam 32b in the width direction toward the central linear region 39, excluding the end portions. The support beams 32b in Figs. 33 and 34 have cross-sectional shapes that are perpendicular to the width direction and that change intermittently along the width direction.

For the reflecting parts 3b including the support beams 32b in Figs. 33 and 34, when the portion between each end portion and the central linear region 39 is divided into a plurality of sections U in the width direction, the ratio between the distance in the width direction from the end portion to the center of each section U and an average value of the flexural rigidity of the reflecting part 3b in the section U is approximately constant in the plurality of sections U. This allows the reflection surface 30 to be bent in a generally arc shape. In addition, the weight of the support beams 32b can be reduced by forming the plurality of through holes 322 in the support beams 32b. Note that the support beams 32b in Figs. 28 and 30.A may also have a plurality of through holes 322 to adjust the flexural rigidity in each section.

As described above, in the sunlight concentrating apparatus 1, the reflecting part having a cross-sectional shape that is perpendicular to the width direction and that changes along the width direction (preferably, approximately over the width direction) so that the reflection surface 30 can be bent in a generally arc shape can be achieved in various forms.

The above-described sunlight concentrating apparatus 1 can be modified in various ways. For example, the ratio between the distance from each end portion in the width direction and the second moment of area at this distance may be made constant between the end portion and the central linear region 39, by changing the thickness in the central normal direction in one range of a target portion of the support plate in the width direction (e.g., an approximately 80% range of the entire length from the fixed end) and changing the axial width in the other range. Alternatively, both of the thickness in the central normal direction and the width of the axial direction may be changed as necessary. For example, it is possible to employ a support plate whose target portion as viewed in the central normal direction has a generally triangular shape having a blunt vertex in the end portions and whose thickness in the central normal direction changes only in the vicinity of the end portions. As described above, the support plates in which the ratio between the distance in the width direction from each end portion in the width direction and the second moment of area at this distance is constant between the end portion and the central linear region 39 can be implemented in various forms (the same applies to the case where the ratio between the distance in the width direction from each end portion of the reflecting part in the width direction and the flexural rigidity of the reflection part at this distance is constant).

The support plates 32 of the reflecting part 3 may be omitted. In this case, the mirror plate 31 is configured such that the ratio between the distance in the width direction from each end portion in the width direction and the second moment of area at this distance is constant between the end portion and the central linear region 39. Fig. 35 illustrates an example of such a mirror plate 31 in which a plurality of rhombic mirror plates 31 are densely arrayed. As described above, in the sunlight concentrating apparatus 1, the reflection surface 30 can be bent in a generally arc shape on condition that, when the mirror plates 31 of the reflecting part 3 or the support plates 32 laid on the mirror plates 31 are taken as a target plate member, the ratio between the distance in the width direction from each end portion of the reflecting part 3 and the second moment of area of the target plate member at this distance is constant between the end portion and the central linear region 39. Note that the axial widths and the thicknesses of the above-described support plates 32, 32a and the mirror plates 31 in Fig. 35 may be changed in stages along the width direction.

The sunlight concentrating apparatus 1 may include the rotating mechanism 4 having a motor and rotate the main shaft part 2 via a speed-reduction mechanism. Alternatively, the sliding mechanism 72 may use mechanical elements (e.g., gears) other than cams to slide the sliding rods 71 in the axial direction in accordance with the rotation of the main shaft part 2. Moreover, in the motion transmission mechanism 73, the sliding rods 71 and the end portions of the reflecting part 3 may be mechanically coupled to each other by a link mechanism, for example, so that the end portions of the reflecting part 3 are moved in the central normal direction along with the sliding of the sliding rods 71.

Depending on the design of the sunlight concentrating apparatus 1, a bending mechanism that uses power independent of that of the rotating mechanism 4 may be employed. For example, a bending mechanism having a motor may be disposed below the end portions of the reflecting part 3, and the end portions of the reflecting part 3 may be moved in the central normal direction by the power of the motor. In this case, the drive of the bending mechanism is controlled by the control part in accordance with the rotation of the main shaft part 2 by the rotating mechanism 4.

The heating medium in the heat collecting part 11 of the solar heat collecting system 10 may be used in applications other than electric power generation. The sunlight concentrating apparatus 1 having the reflection surface 30 that is a variable curved surface may be installed in facilities other than the solar heat collecting system 10.

The configurations of the above-described preferred embodiments and variations may be appropriately combined as long as there are no mutual inconsistencies.

While the invention has been shown and described in detail, the foregoing description is in all aspects illustrative and not restrictive. It is therefore to be understood that numerous modifications and variations can be devised without departing from the scope of the invention.

Reference Signs List

| | |
|---|---|
| 1 | Sunlight concentrating apparatus |
| 2 | Main shaft part |
| 3, 3a, 3b | Reflecting part |
| 4 | Rotating mechanism |
| 5 | Main shaft supporter |
| 7 | Bending mechanism |
| 11 | Heat collecting part |
| 30 | Reflection surface |
| 31 | Mirror plate |
| 32, 32a | Support plate |
| 32b | Support beam |
| 33, 33a | Rib member |
| 39 | Central linear region |
| 321 | End portion (of support plate) |
| J1 | Central axis |

Claims

1. A sunlight concentrating apparatus for concentrating sunlight onto a heat collecting part, comprising;
a main shaft part that is long in a predetermined axial direction;

a plate-like reflecting part having an upper surface that is a reflection surface extending in said axial direction and a width direction perpendicular to said axial direction, and having a lower surface in which a central linear region that extends in said axial direction at approximately a center in said width direction is fixed to said main shaft part;
a main shaft supporter for supporting said main shaft part rotatably about a central axis parallel to said axial direction;
a rotating mechanism for rotating said main shaft part to tilt said reflection surface; and
a pair of bending mechanisms for bending said reflection surface by moving opposite end portions in said width direction of said reflecting part in a similar manner in a central normal direction in accordance with rotation of said main shaft part, said central normal direction being a direction perpendicular to said axial direction and said width direction of said reflection surface,
wherein said reflecting part has a cross-sectional shape that is perpendicular to said width direction and that changes along said width direction to bend said reflection surface in a generally arc shape.

2. The sunlight concentrating apparatus according to claim 1, wherein
when a mirror plate of said reflecting part or a support plate laid on said mirror plate is taken as a target plate member, a ratio between a distance in said width direction from each end portion of said reflecting part in said width direction and a second moment of area of said target plate member at said distance is constant between said each end portion and said central linear region, or a ratio between said distance and flexural rigidity of said reflecting part at said distance is constant between said each end portion and said central linear region.

3. The sunlight concentrating apparatus according to claim 2, wherein
said reflecting part includes said mirror plate and said support plate,
said target plate member is said support plate, and
said support plate has a triangular portion between said each end portion and said central linear region, said triangular portion having a base located in said central linear region and a vertex opposing said base and located in the vicinity of said each end portion.

4. The sunlight concentrating apparatus according to claim 3, wherein
said mirror plate is a rectangular plate having sides parallel to said axial direction and said width direction,
said reflecting part further includes another support plate that is disposed apart in said axial direction from said support plate and that is laid on said mirror plate, and
said another support plate has a triangular portion between said each end portion and said central linear region, said triangular portion having a base located in said central linear region and a vertex opposing said base and located in the vicinity of said each end portion.

5. The sunlight concentrating apparatus according to claim 4, wherein
said reflecting part further includes a rib member that is connected to said triangular portion of said support plate and said triangular portion of said another support plate and in contact with said mirror plate at a position distanced in said width direction from said central linear region.

6. The sunlight concentrating apparatus according to claim 2, wherein
said reflecting part includes said mirror plate and said support plate, and
said support plate has a portion whose thickness gradually increases from said each end portion toward said central linear region to make the ratio between said distance and the flexural rigidity of said reflecting part at said distance constant between said each end portion and said central linear region.

7. The sunlight concentrating apparatus according to claim 6, wherein
said support plate is formed of a material having a lower Young's modulus than said mirror plate.

8. The sunlight concentrating apparatus according to claim 2, wherein
said reflecting part includes said mirror plate and said support plate, and
said support plate has a portion whose width in said axial direction gradually increases from said each end portion toward said central linear region to make the ratio between said distance and the flexural rigidity of said reflecting part at said distance constant between said each end portion and said central linear region.

9. The sunlight concentrating apparatus according to any one of claims 3 to 8, wherein
with respect to said width direction, opposite end portions of said support plate are located outward of opposite end portions of said mirror plate, and
said pair of bending mechanisms moves said opposite end portions of said support plate in said central normal direction.

10. The sunlight concentrating apparatus according to claim 1, wherein
said reflecting part includes:

a mirror plate; and
a support beam extending in said width direction and for supporting said mirror plate, and
said support beam has a cross-sectional shape that is perpendicular to said width direction and that changes along said width direction to make a ratio between a distance in said width direction from each end portion of said reflecting part in said width direction and flexural rigidity of said reflecting part at said distance constant between said each end portion and said central linear region.

11. The sunlight concentrating apparatus according to claim 10, wherein
said support beam has a portion whose height in said central normal direction or whose width in said axial direction gradually increases from said each end portion toward said central linear region.

12. The sunlight concentrating apparatus according to claim 1, wherein
when a portion of said reflecting part between each end portion in said width direction and said central linear region is divided into a plurality of sections in said width direction, a ratio between a distance in said width direction from said each end portion to each section and an average value of flexural rigidity of said reflecting part in said each section is approximately constant in said plurality of sections.

FIG. 1

FIG. 2

EP 2 980 507 A1

FIG. 3

*FIG. 4*

1

39    3    30

J1    23

21    2

52    52

5    53    53

51

Z

X

Y

Ⅳ — Ⅳ

FIG. 5

FIG. 6

VI—VI

*FIG. 7*

*FIG. 8*

POSITION IN LENGTHWISE DIRECTION OF CANTILEVER
(WIDTH DIRECTION OF REFLECTION SURFACE) [mm]

FIG. 9

## FIG. 10

POSITION IN WIDTH DIRECTION
OF REFLECTION SURFACE [mm]

## FIG. 11

FIG. 12

## FIG. 13

POSITION IN WIDTH DIRECTION
OF REFLECTION SURFACE [mm]

*FIG. 14*

FIG. 15

POSITION IN WIDTH DIRECTION
OF REFLECTION SURFACE [mm]

*FIG. 16*

*FIG. 17*

31

*FIG. 18*

*FIG. 19*

WIDTH OF SUPPORT PLATE [mm]

*FIG. 20*

POSITION IN WIDTH DIRECTION OF REFLECTION SURFACE [mm]

## FIG. 21

## FIG. 22

3a

FIG. 23

FIG. 24

FIG. 25

## FIG. 26

## FIG. 27

FIG. 28

32b

V2

FIG. 29

HEIGHT OF SUPPORT BEAM [mm]

20

15

10

5

0

-5

-10

0    100    200    300    400    500    600

POSITION IN WIDTH DIRECTION OF REFLECTION SURFACE [mm]

FIG. 30A

32b

FIG. 30B

32b

V2

FIG. 31

HEIGHT OF SUPPORT BEAM [mm]

U   U   U   U   U   U

0   100   200   300   400   500   600

POSITION IN WIDTH DIRECTION OF REFLECTION SURFACE [mm]

FIG. 32

TANGENTIAL ANGULAR DIFFERENCE [DEGREES]

0.2
0.1
0
-0.1
-0.2
-0.3
-0.4
-0.5

F1   F2   F3

0   100   200   300   400   500   600

POSITION IN WIDTH DIRECTION OF REFLECTION SURFACE [mm]

*FIG. 33*

*FIG. 34*

*FIG. 35*

**INTERNATIONAL SEARCH REPORT**

| International application No. |
| --- |
| PCT/JP2014/056904 |

| A. CLASSIFICATION OF SUBJECT MATTER |
| --- |
| F24J2/38(2014.01)i, F24J2/16(2006.01)i |

According to International Patent Classification (IPC) or to both national classification and IPC

| B. FIELDS SEARCHED |
| --- |

Minimum documentation searched (classification system followed by classification symbols)
F24J2/38, F24J2/16

Documentation searched other than minimum documentation to the extent that such documents are included in the fields searched

| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| X<br>A | WO 2011/086825 A1 (Hitachi Zosen Corp.),<br>21 July 2011 (21.07.2011),<br>paragraphs [0064] to [0074]; fig. 16 to 22<br>& US 2012/0285440 A1 & EP 2527760 A1<br>& CN 102630292 A & AU 2010342008 A | 1<br>2-12 |
| X<br>A | US 2010/0199972 A1 (RANDOLPH C. BROST),<br>12 August 2010 (12.08.2010),<br>paragraphs [0234] to [0244]; fig. 44 to 45<br>& WO 2010/083292 A1 | 1<br>2-12 |
| A | US 4141626 A (WILLIAM J. TREYTL),<br>27 February 1979 (27.02.1979),<br>entire text; all drawings<br>(Family: none) | 1-12 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>03 June, 2014 (03.06.14) | Date of mailing of the international search report<br>17 June, 2014 (17.06.14) |
| --- | --- |
| Name and mailing address of the ISA/<br>    Japanese Patent Office | Authorized officer |
| Facsimile No. | Telephone No. |

Form PCT/ISA/210 (second sheet) (July 2009)

40

**INTERNATIONAL SEARCH REPORT**

| International application No. |
|---|
| PCT/JP2014/056904 |

C (Continuation). DOCUMENTS CONSIDERED TO BE RELEVANT

| Category* | Citation of document, with indication, where appropriate, of the relevant passages | Relevant to claim No. |
|---|---|---|
| A | US 4719903 A (ROGER A. POWELL), 19 January 1988 (19.01.1988), entire text; all drawings & US 4888063 A | 1-12 |

Form PCT/ISA/210 (continuation of second sheet) (July 2009)

**EP 2 980 507 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011086825 A